# EUROPEAN PATENT SPECIFICATION

(11) **EP 2 678 867 B1**
(45) Date of publication and mention of the grant of the patent: **19.08.2015**
(21) Application number: 12744118.6
(22) Date of filing: 16.01.2012
(51) Int. Cl.: H01B 3/42, C08K 5/00, C08L 71/12, C08L 71/10, B29C 47/28, B29C 47/26

(54) **METHOD OF FORMING COATED CONDUCTOR AND COATED CONDUCTOR FORMED THEREBY**
VERFAHREN ZUR FORMUNG EINES BESCHICHTETEN LEITERS UND IN DIESEM VERFAHREN GEFORMTER BESCHICHTETER LEITER
PROCÉDÉ DE FORMATION D'UN CONDUCTEUR REVÊTU ET CONDUCTEUR REVÊTU AINSI FORMÉ

(30) Priority: 25.02.2011 US 201113034831
(43) Date of publication of application: 01.01.2014
(73) Proprietor: SABIC Innovative Plastics IP B.V., 4612 PX Bergen op Zoom (NL)
(72) Inventor: NAKASHIMA, Kouichi, Moka-shi Tochigi 321-4392 (JP); SUGAWARA, Takamune, Moka-shi Tochigi 321-4392 (JP)
(74) Representative: Bublak, Wolfgang
(86) International application number: PCT/IB2012/050205
(87) International publication number: WO 2012/114207

(56) References cited:
- US-A- 4 201 532
- US-A- 5 261 805
- US-A1- 2010 122 845
- US-A1- 2010 139 944

## Description

### BACKGROUND OF THE INVENTION

A commonly used insulating material for insulated electrical and optical conductors is the halogenated resin, poly(vinyl chloride) (PVC). PVC is relatively inexpensive, widely available, and flexible, and it has inherent flame resistant properties. However, there is an increasing desire to reduce or eliminate the use of halogenated resins in insulating layers due to their negative impact on the environment. Many jurisdictions now mandate or are planning to mandate restrictions on the use of halogenated materials such as PVC. Therefore there is a continuing need to develop new halogen-free insulation materials.

Recent research has demonstrated that certain halogen-free poly(arylene ether) compositions can possess the physical and flame retardant properties needed for use as insulation in some wire and cable applications. See, for example, U.S. Patent Application Publication Nos. US 2006/0106139 A1, US 2006/0182967 A1, US 2007/0261878 A1, and US 2009/0133896 A1 of Kosaka et al.; US 2006/0131059 A1 of Xu et al.; US 2009/0084574 A1 of Balfour et al.; US 2009/0084577 A1, US 2009/0088501 A1, and US 2009/0088502 A1 of Qiu et al.; and US 2010/0122845 A1 and US 2010/0139944 A1 of Guo et al. However, coated conductors using some poly(arylene ether) compositions have exhibited inadequate aging characteristics, particularly under the harsh conditions of automotive use. There is therefore a need for methods of forming halogen-free coated conductors that exhibit improved aging characteristics. US 4 201 532 A relates to dies of the spiral mandrel type for extrusion of molten plastic material. US 5 261 805 A describes a further extrusion die for the manufacture of blown plastic films and seeks to improve the extrusion die of US 4 201 532 A by a specific arrangement aiming at improving the homogeneity of the resulting plastic film.

### BRIEF DESCRIPTION OF THE INVENTION

One embodiment is a method of forming a coated conductor, comprising: extruding a thermoplastic composition through a crosshead die apparatus to extrusion coat a conductor with the thermoplastic composition, thereby forming a coated conductor comprising the conductor and an insulating layer disposed on the conductor; wherein the crosshead die apparatus comprises a die, and a die insert comprising a helical channel; wherein said extruding comprises a movement of the thermoplastic composition through the helical channel toward the die; and wherein the thermoplastic composition comprises 5 to 60 weight percent of a poly(arylene ether), 5 to 70 weight percent of a hydrogenated block copolymer of an alkenyl aromatic compound and conjugated diene, and 2 to 40 weight percent of a flame retardant; wherein all weight percent values are based on the total weight of the thermoplastic composition unless another basis is specified.

Further described is a coated conductor (not claimed), comprising: a conductor; and an insulating layer disposed on the conductor; wherein the insulating layer comprises a thermoplastic composition comprising about 5 to about 60 weight percent of a poly(arylene ether), about 5 to about 70 weight percent of a hydrogenated block copolymer of an alkenyl aromatic compound and conjugated diene, and about 2 to about 40 weight percent of a flame retardant; wherein all weight percent values are based on the total weight of the thermoplastic composition unless another basis is specified; and wherein the insulating layer viewed in cross section comprises at least two weld lines.

These and other embodiments are described in detail below.

### BRIEF DESCRIPTION OF THE DRAWINGS

Referring now to the drawings wherein like elements are numbered alike in several FIGURES:

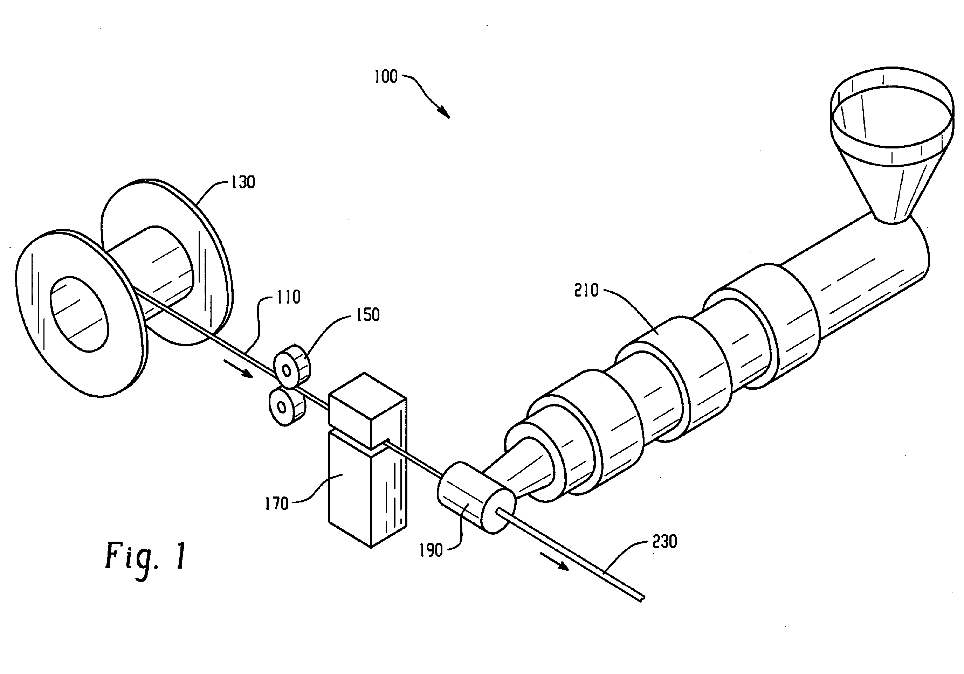

FIG. 1 is a view of an extrusion coating apparatus 100 which converts uncoated conductor 110 to coated conductor 230; uncoated conductor 110 is unspooled from uncoated wire spool 130 and traverses tensioner 150 and conductor pre-heater 170 before entering crosshead die 190 of extruder 210, where it is coated with a thermoplastic composition to form coated conductor 230;

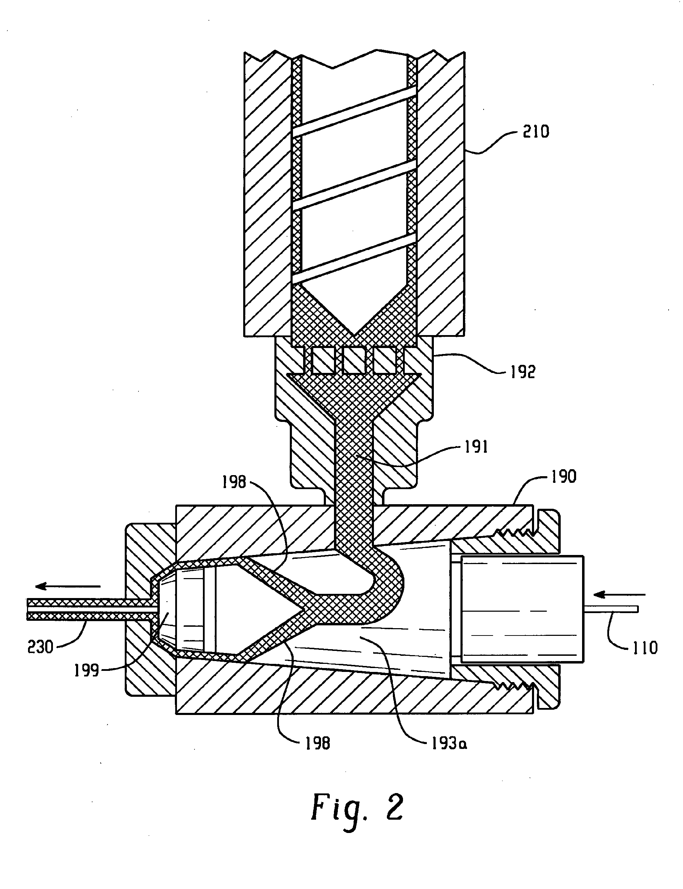

FIG. 2 is a cross-sectional view of a portion of extruder 210 and crosshead die 190; uncoated conductor 110 enters crosshead die 190 and is drawn through heart-sleeve distributor 193a; molten thermoplastic composition 191 enters crosshead die 190 via breaker plate 192 and flows through channels 198 of the heart-sleeve distributor 193a past tip 199, contacts uncoated conductor 110, and exits die 199 as the insulating layer of coated conductor 230;

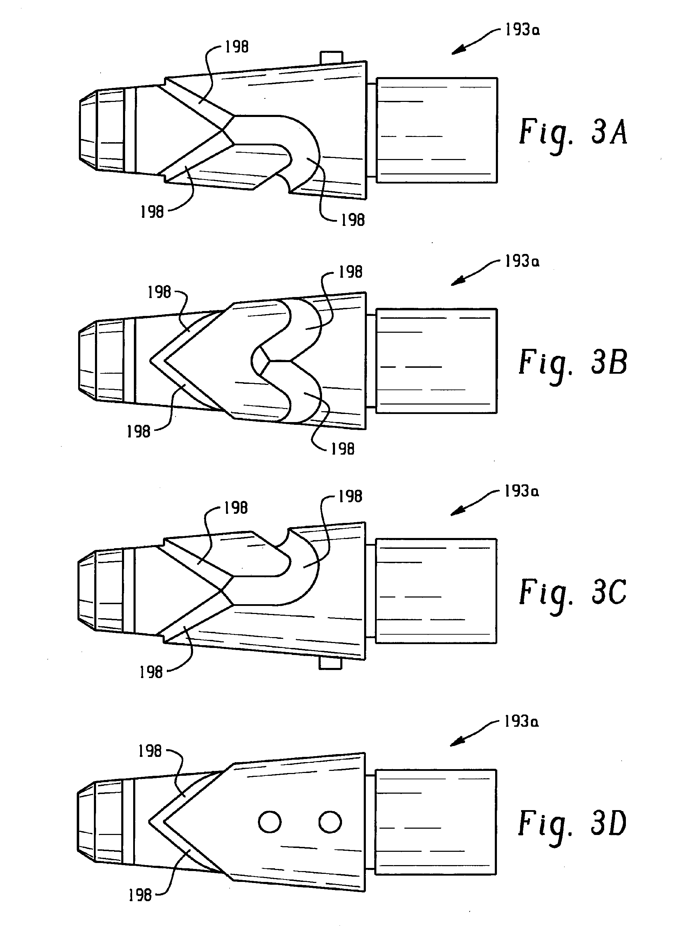

FIG. 3 provides four views corresponding to 90° rotations of a heart-sleeve distributor 193a comprising multiple channels 198;

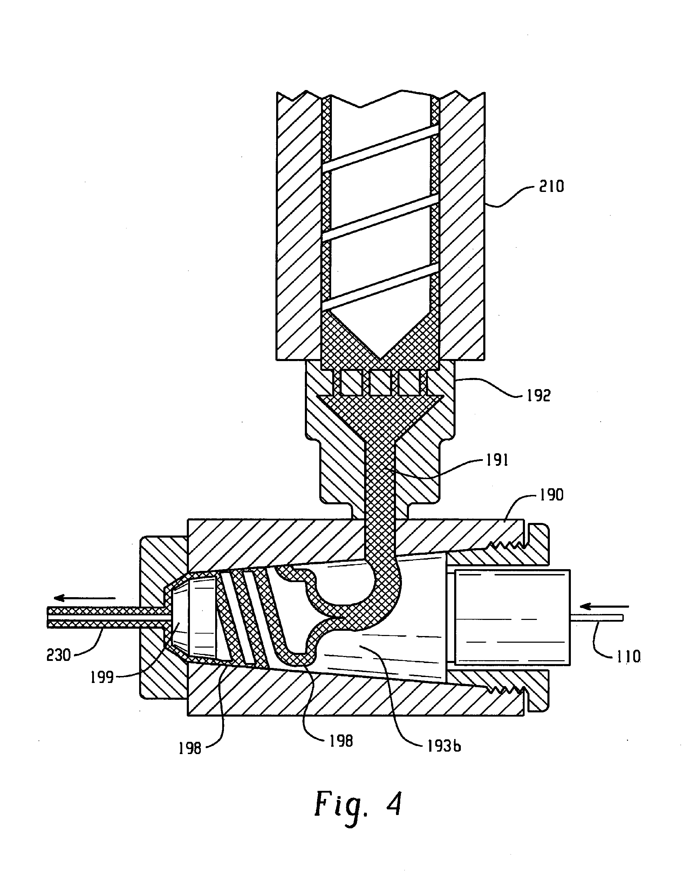

FIG. 4 is a cross-sectional view of a portion of crosshead die 190; uncoated conductor 110 enters crosshead die 190 via helical distributor 193b; molten thermoplastic composition 191 enters crosshead die 190 via breaker plate 192 and flows through channels 198 of the helical distributor 193b past tip 199, contacts uncoated conductor 110, and exits die 199 as part of coated conductor 230;

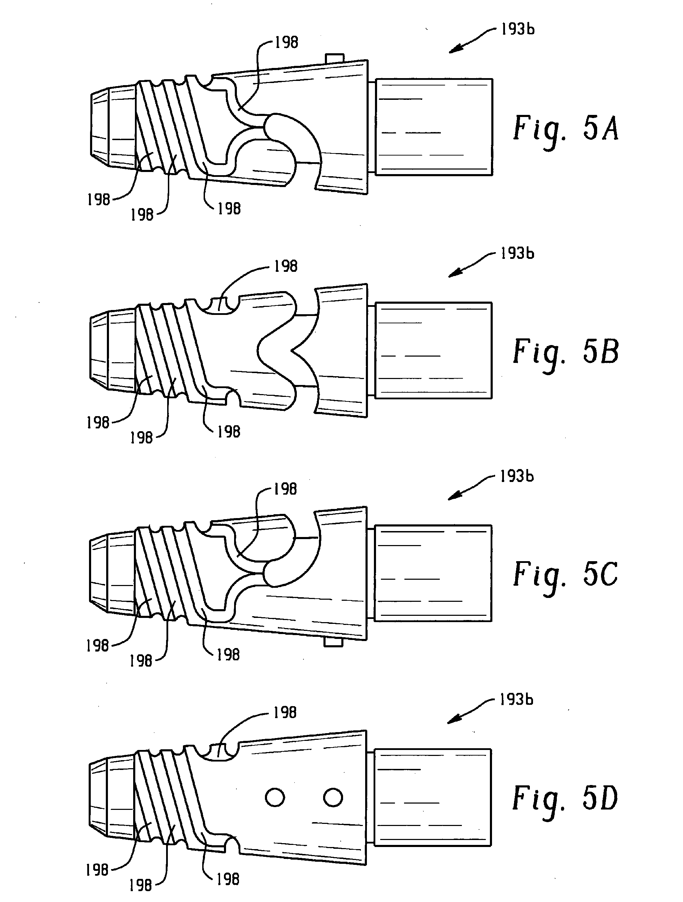

FIG. 5 provides four views corresponding to 90° rotations, of a helical distributor 193b comprising multiple channels 198;

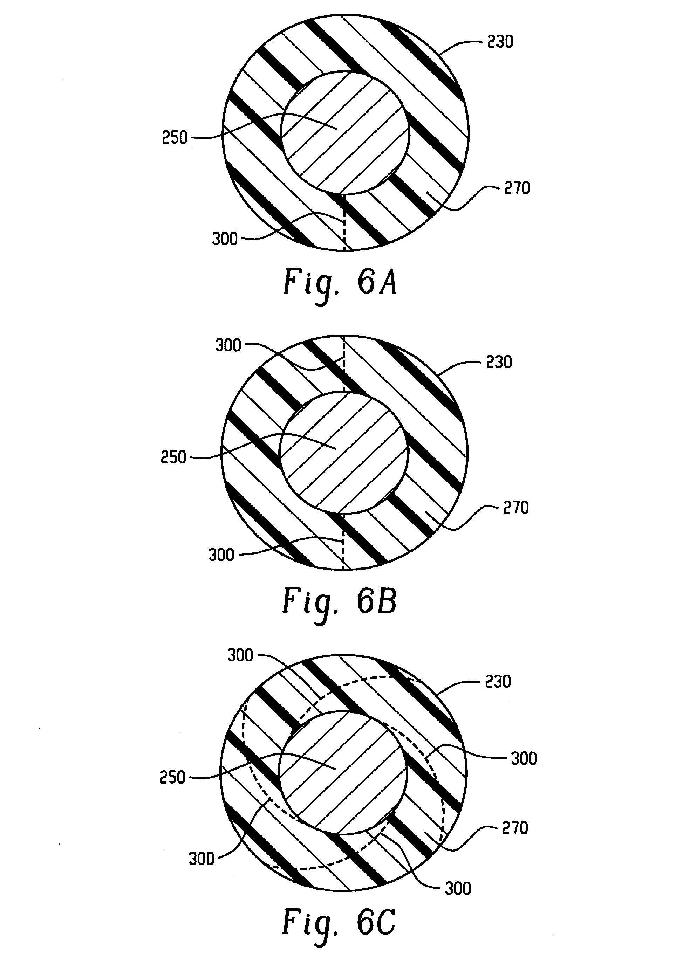

FIG. 6 provides cross-sectional views of three coated conductors 230 prepared using three different distributor types, the coated conductors 230 exhibiting weld line(s) 300 characteristic of the respective distributor type; (a) is a coated conductor 230 comprising a conductor 250 and an insulating layer 270, the insulating layer 270 prepared using a so-called coat hanger distributor and comprising a single weld line 300; (b) is a coated conductor 230 comprising a conductor 250 and an insulating layer 270, the insulating layer 270 prepared using a so-called heart-sleeve distributor and comprising two weld lines 300; (c) is a coated conductor 230 comprising a conductor 250 and an insulating layer 270, the insulating layer 270 prepared using a helical distributor comprising four helical channels such that the insulating layer 270 comprises four weld lines 300.

### DETAILED DESCRIPTION OF THE INVENTION

The present inventors have determined that halogen-free coated conductors exhibiting improved aging characteristics can be produced with a method that combines a specific poly(arylene ether) composition and a crosshead die apparatus having a die insert with a specific flow path geometry. The same advantages were not observed when the same die insert was used with a halogen-free polyethylene composition or with a poly(vinyl chloride) composition. There is therefore an unexpected synergy between the thermoplastic composition and the die insert flow path geometry.

Thus, one embodiment is a method of forming a coated conductor, comprising: extruding a thermoplastic composition through a crosshead die apparatus to extrusion coat a conductor with the thermoplastic composition, thereby forming a coated conductor comprising the conductor and an insulating layer disposed on the conductor; wherein the crosshead die apparatus comprises a die, and a die insert comprising a helical channel; wherein said extruding comprises a movement (i.e., flow) of the thermoplastic composition through the helical channel toward the die; and wherein the thermoplastic composition comprises 5 to 60 weight percent of a poly(arylene ether), 5 to 70 weight percent of a hydrogenated block copolymer of an alkenyl aromatic compound and conjugated diene, and 2 to 40 weight percent of a flame retardant; wherein all weight percent values are based on the total weight of the thermoplastic composition unless another basis is specified.

The (uncoated) conductor can be an electrical conductor or an optical conductor. When the conductor is an electrical conductor, it can comprise aluminum or an alloy comprising aluminum. The conductor can also be cladded conductor comprising aluminum or an alloy comprising aluminum.

In some embodiments, the conductor is solid conductor, or a round strand or compressed or compact stranded conductor essentially meeting or exceeding the performance requirements set forth by UL 83 (revised in 2008), or UL 44 (revised in 2008), or UL 854 (revised in 2007), or ISO 6722 (as of second edition, 2006-08-01), or ISO 14572 (as of second edition, 2006-11-15), or ASTM B256-02 (revised in 2002), or ASTM B800-05 (revised in 2005), or ASTM B566-04a (revised in 2004), or ASTM B609M-04 (revised in 2004) and UL1581 (revised in 2008).

In some embodiments, the conductor is a solid conductor, or round strand or compressed or compact stranded conductor essentially meeting or exceeding the test method requirements set forth by UL1581 (revised in 2008), or UL 2556 (revised in 2007), or ISO 6722 (as of second edition, 2006-08-01), or ASTM B258-02 (revised in 2008).

In some embodiments, the conductor comprises a single conductor, a single strand, a plurality of single conductors, or a plurality of strands or a combination thereof. In some embodiments, a plurality of single conductors, or a plurality of strands can be bundled, twisted, or braided to form a conductor. The single individual conductor used in making up a stranded conductor is either drawn to the same diameter or to a different diameter than the other strands and need not have the diameter of any American Wire Gauge (AWG) or other standard gauge number. Additionally, the conductor can have various cross-sectional shapes such as round, oval, square, oblong, or trapezoidal.

The conductor can have a cross-section that meets at least one of following: (i) an AWG of AWG 56 to AWG 26; (ii) a nominal cross-section area of 0.000122 to 0.128 square millimeters (corresponding to AWG 56 to AWG 26 according to ASTM B256-02); and (iii) a nominal diameter from 0.0124 to 0.404 millimeters (corresponding to AWG 56 to AWG 26 according to UL 1581, 4th edition, Table 20.1). The insulating layer of the covered conductor can have a thickness of 0.010 to 0.85 millimeters.

In some embodiments, the conductor has a cross-section that has an AWG number from AWG 56 to AWG 26. Within this range, the conductor can have a cross-section of AWG number greater than or equal to AWG 30, or, more specifically greater than or equal to AWG 35. Also within this range, the conductor can have a cross-section of AWG number less than or equal to AWG 50, or, more specifically, less than or equal to AWG 45.

In some embodiments, the conductor has a nominal cross-sectional area of 0.000122 to 0.128 square millimeters (corresponding to AWG 56 to AWG 26 according to ASTM B256-02). Within this range, the conductor can have a nominal cross-sectional area of greater than or equal to 0.000497 square millimeter (AWG 50 according to ASTM B256-02), more specifically greater than or equal to 0.00487 square millimeter (AWG 40, according to ASTM B256-02). Also within this range, the conductor can have a nominal cross-sectional area of less than or equal to 0.0507 square millimeter (AWG 30, according to ASTM B256-02), more specifically less than or equal 0.0159 square millimeter (AWG 35, according to ASTM B256-02).

In some embodiments, the conductor has a nominal diameter of 0.0124 to 0.404 millimeter (corresponding to AWG 56 to AWG 26, according to UL 1581, 4th edition, Table 20.1). Within this range, the conductor can have a nominal diameter greater than or equal to area of 0.0251 millimeter (AWG 50 according to UL 1581, 4th edition, Table 20.1), more specifically greater than or equal to 0.0447 millimeter (AWG 40, according to UL 1581, 4th edition, Table 20.1). Also within this range, the conductor can have a nominal diameter less than or equal to 0.254 millimeter (AWG 30 according to UL 1581, 4th edition, Table 20.1), more specifically, less than or equal 0.142 millimeter (AWG 35, according to UL 1581, 4th edition, Table 20.1). The maximum and minimum range for the nominal diameter according to UL 1581, 4th edition, Table 20.1 would also apply herein.

In some embodiments, the conductor has a cross-section that meets at least one of following: (i) AWG of AWG 24 to AWG 5; (ii) a cross-sectional area of 0.205 to 16.8 square millimeters (corresponding to AWG 24 to AWG 5 according to ASTM B256-02); and (iii) a nominal diameter of 0.511 to 4.62 millimeter (corresponding to AWG 24 to AWG 5 according to UL 1581, 4th edition, Table 20.1). In some embodiments, the insulating layer of the covered conductor has a thickness of 0.25 to 8 millimeters.

In some embodiments, the conductor has a cross-section that has an AWG number from AWG 24 to AWG 5. Within this range, the conductor can have a cross-section of AWG number greater than or equal to AWG 10, more specifically greater than or equal to AWG 12. Also within this range, the conductor can have a cross-section of AWG number less than or equal to AWG 20, more specifically less than or equal to AWG 15.

In some embodiments, the conductor has a nominal cross-sectional area of 0.205 to 16.8 square millimeters (corresponding to AWG 24 to AWG 5 according to ASTM B256-02). Within this range, the conductor can have a nominal cross-section greater than or equal to area of 0.52 square millimeters (AWG 20 according to ASTM B256-02), more specifically greater than or equal to 1.65 square millimeters (AWG 15, according to ASTM B256-02). Also within this range, the conductor can have a nominal cross-section area less than or equal to 5.26 square millimeters (AWG 10, according to ASTM B256-02), more specifically less than or equal 3.31 square millimeters (AWG 12, according to ASTM B256-02).

In some embodiments, the conductor has a nominal diameter of 0.511 to 4.62 millimeters (corresponding to AWG 24 to AWG 5, according to UL 1581, 4th edition, Table 20.1). Within this range, the conductor can have a nominal diameter greater than or equal to area of 0.813 millimeter (AWG 20 according to UL 1581, 4th edition, Table 20.1), more specifically greater than or equal to 1.45 millimeters (AWG 15, according to UL 1581, 4th edition, Table 20.1). Also within this range, the conductor can have a nominal diameter less than or equal to 2.588 millimeters (AWG 10 according to UL 1581, 4th edition, Table 20.1), more specifically less than or equal 2.05 millimeters (AWG 12, according to UL 1581, 4th edition, Table 20.1). The maximum and minimum range for the nominal diameter according to UL 1581, 4th edition, Table 20.1 can also apply herein.

The thickness of the insulation layer is not particularly limited, and smaller thicknesses may be preferable for efficiency. Although the thickness of the insulation layer depends on the diameter of the conductor, the thickness of the insulating layer is typically about 0.01 to about 8.0 millimeters.

In some embodiments, the insulation layer has a thickness of about 0.01 to about 0.85 millimeters. Within this range, the thickness can be greater than or equal to 0.1 millimeter, specifically greater than or equal to 0.25 millimeter. Also within this range, the thickness can be less than or equal to 0.6 millimeter, specifically less than or equal to 0.5 millimeter.

In some embodiments the insulating layer has a thickness of about 0.25 to about 8 millimeters. Within this range, the thickness can be greater than or equal to 0.5 millimeter, specifically greater than or equal to 1.5 millimeters. Also within this range, the thickness can be less than or equal to 5 millimeters, specifically less than or equal to 3 millimeters.

The method comprises extruding a thermoplastic composition through a crosshead die apparatus to extrusion coat a conductor with the thermoplastic composition, thereby forming a coated conductor comprising the conductor and an insulating layer disposed on the conductor. Apparatuses and methods for extrusion coating conductors are known in the art and described, for example, in U.S. Patent Nos. 5,316,583 and 5,888,300 to Milliman. FIG. 1 is a view of an extrusion coating apparatus 100 which converts uncoated conductor 110 to coated conductor 230. Uncoated conductor 110 is unspooled from uncoated wire spool 130 and traverses tensioner 150 and conductor pre-heater 170 before entering crosshead die 190 of extruder 210, where it is coated with a thermoplastic composition to form coated conductor 230.

FIG. 2 is a cross-sectional view of a portion of extruder 210 and crosshead die 190. Uncoated conductor 110 enters crosshead die 190 and is drawn through heart-sleeve distributor 193a; molten thermoplastic composition 191 enters crosshead die 190 via breaker plate 192 and flows through channels 198 of the heart-sleeve distributor 193a past tip 199; it contacts uncoated conductor 110 and exits die 199 as the insulating layer of coated conductor 230. FIG. 3 provides four views corresponding to 90° rotations, of a heart-sleeve distributor 193a comprising multiple channels 198.

In the present method, the crosshead die apparatus comprises a die, and a die insert comprising a helical channel. The extruding comprises a movement (i.e., flow) of the thermoplastic composition through the helical channel toward the die. In some embodiments, the die insert comprises at least two helical channels, specifically at least three helical channels, more specifically at least four helical channels.

FIG. 4 is a cross-sectional view of a portion of crosshead die 190. Uncoated conductor 110 enters crosshead die 190 via helical distributor 193b. Molten thermoplastic composition 191 enters crosshead die 190 via breaker plate 192 and flows through channels 198 of the helical distributor 193b past tip 199, contacts uncoated conductor 110, and exits die 199 as part of coated conductor 230. FIG. 5 provides four views corresponding to 90° rotations, of a helical distributor 193a comprising multiple channels 198.

The helical channel defines an axis of a helix. In general, the axis of the helix corresponds to the path of the conductor through the center of the die insert. In some embodiments, the helical channel comprises at least 0.5 rotation about the axis of the helix. The helical channel can comprise 0.5 to 2.5 rotations, specifically about 0.5 to about 1.5 rotation about the axis of the helix.

Provided that the helical channels remain spatially separated, molten thermoplastic composition flowing through the channels will form a coated conductor having a number of weld lines equal to the number of helical channels. Thus, when the die insert comprises at least two or at least three or at least four helical channels, the insulating layer can comprise at last two or at least three or at least four weld lines, respectively. Although weld lines are not always apparent in a visual inspection of the coated conductor, they can more easily be observed in a cross section of the insulating layer. In some embodiments, the weld lines are observed by microscopy of a thin cross section of the insulating layer, optionally after treatment of the cross-section with a liquid that slightly swells (but does not dissolve) the insulating layer cross-section.

FIG. 6 provides cross-sectional views of three coated conductors 230 prepared using three different distributor types, the coated conductors 230 exhibiting the weld line(s) 300 characteristic of the respective distributor type; (a) is a coated conductor 230 comprising a conductor 250 and an insulating layer 270, the insulating layer 270 prepared using a so-called coat hanger distributor and comprising a single weld line 300; (b) is a coated conductor 230 comprising a conductor 250 and an insulating layer 270, the insulating layer 270 prepared using a so-called heart-sleeve distributor and comprising two weld lines 300; (c) is a coated conductor 230 comprising a conductor 250 and an insulating layer 270, the insulating layer 270 prepared using a helical distributor with four helical channels, the insulating layer 270 comprising four weld lines 300.

In some embodiments, the die insert further comprises a retrograde channel in fluid communication with the helical channel, and extruding comprises a movement (or flow) of the thermoplastic composition through the retrograde channel prior to said movement through the helical channel. As used herein, the term "retrograde channel" refers to a channel directing a movement of thermoplastic composition in a direction that has a component of movement away from the die. For example, in Figure 5b, the two channels forming a V-shapc in the middle of the die insert are retrograde channels because they direct the movement of thermoplastic composition away from the die before the thermoplastic movement is directed back toward the die and into the helical channels.

To coat the conductor, the thermoplastic composition is extruded at a temperature of 255 to 310°C. Within this range, the temperature of the extruded thermoplastic composition can be about 260 to about 305°C, specifically about 270 to about 305°C, more specifically about 280 to about 300°C, even more specifically about 285 to about 295°C.

The thermoplastic composition comprises a poly(arylene ether). Suitable poly(arylene ether)s include those comprising repeating structural units having the formula 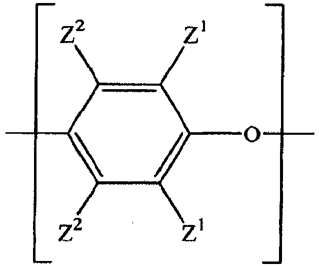 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more halogen atoms, nitro groups, cyano groups, carboxylic acid groups, ester groups, amide groups, sulfonyl groups, sulfoxyl groups, sulfonamide groups, sulfamoyl groups, alkoxyl groups, amino groups, hydroxyl groups, or the like, or it can contain heteroatoms or carbonyl groups within the backbone of the hydrocarbyl residue. As one example, Z¹ can be a di-n-butylaminomethyl group formed by reaction of the di-n-butylamine component of an oxidative polymerization catalyst with the methyl group of a terminal 3,5-dimethyl-4-hydroxyphenyl group. As another example, Z¹ can be a morpholinomethyl group formed by reaction of the morpholine component of an oxidative polymerization catalyst with the methyl group of a terminal 3,5-dimethyl-4-hydroxyphenyl group.

In some embodiments, the poly(arylene ether) has an intrinsic viscosity of about 0.25 to about 1 deciliter per gram measured at 25°C in chloroform. Within this range, the poly(arylene ether) intrinsic viscosity can be about 0.3 to about 0.65 deciliter per gram, more specifically about 0.35 to about 0.5 deciliter per gram, even more specifically about 0.4 to about 0.5 deciliter per gram.

In some embodiments, the poly(arylene ether) is characterized by a weight average molecular weight and a peak molecular weight, wherein a ratio of the weight average molecular weight to the peak molecular weight is about 1.3 : 1 to about 4 : 1. Within this range, the ratio can be about 1.5 : 1 to about 3 : 1, specifically about 1.5 : 1 to about 2.5 : 1, more specifically about 1.6 : 1 to about 2.3 : 1, still more specifically 1.7 : 1 to about 2.1 : 1. The poly(arylene ether) molecular weight distribution is typically analyzed in the molecular weight range from 250 to 1,000,000 atomic mass units. As used herein, the term "peak molecular weight" is defined as the most commonly occurring molecular weight in the molecular weight distribution. In statistical terms, the peak molecular weight is the mode of the molecular weight distribution. In practical terms, when the molecular weight is determined by a chromatographic method such as gel permeation chromatography, the peak molecular weight is the poly(arylene ether) molecular weight of the highest point in a plot of molecular weight on the x-axis versus absorbance on the y-axis. A poly(arylene ether) having these molecular weight characteristics can be prepared using a morpholine-containing catalyst as described, for example, in U.S. Patent Application Serial No. 13/057,480, filed February 4, 2011.

In some embodiments, the poly(arylene ether) is a poly(2,6-dimethyl-1,4-phenylene ether) prepared with a morpholine-containing catalyst, wherein a purified sample of poly(2,6-dimethyl-1,4-phenylene ether) prepared by dissolution of the poly(2,6-dimethyl-1,4-phenylene ether) in toluene, precipitation from methanol, reslurry, and isolation has a monomodal molecular weight distribution in the molecular weight range of 250 to 1,000,000 atomic mass units, and comprises less than or equal to 2.2 weight percent of poly(2,6-dimethyl-1,4-phenylene ether) having a molecular weight more than fifteen times the number average molecular weight of the entire purified sample. In some embodiments, the purified sample after separation into six equal poly(2,6-dimethyl-1,4-phenylene ether) weight fractions of decreasing molecular weight comprises a first, highest molecular weight fraction comprising at least 10 mole percent of poly(2,6-dimethyl-1,4-phenylene ether) comprising a terminal morpholine-substituted phenoxy group. The poly(2,6-dimcthyl-1,4-phenylene ether) according to these embodiments is further described in U.S. Patent Application Publication No. US 2011/0003962 A1 of Carrillo et al.

In some embodiments, the poly(arylene ether) is essentially free of incorporated diphenoquinone residues. In the context, "essentially free" means that the less than 1 weight percent of poly(arylene ether) molecules comprise the residue of a diphenoquinone. As described in U.S. Patent No. 3,306,874 to Hay, synthesis of poly(arylene ether) by oxidative polymerization of monohydric phenol yields not only the desired poly(arylene ether) but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(arylene ether) (i.e., the diphenoquinone is incorporated into the poly(arylene ether) structure) by heating the polymerization reaction mixture to yield a poly(arylene ether) comprising terminal or internal diphenoquinone residues. For example, as shown in Scheme 1, when a poly(arylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(arylene ether) with terminal and internal residues of incorporated diphenoquinone. 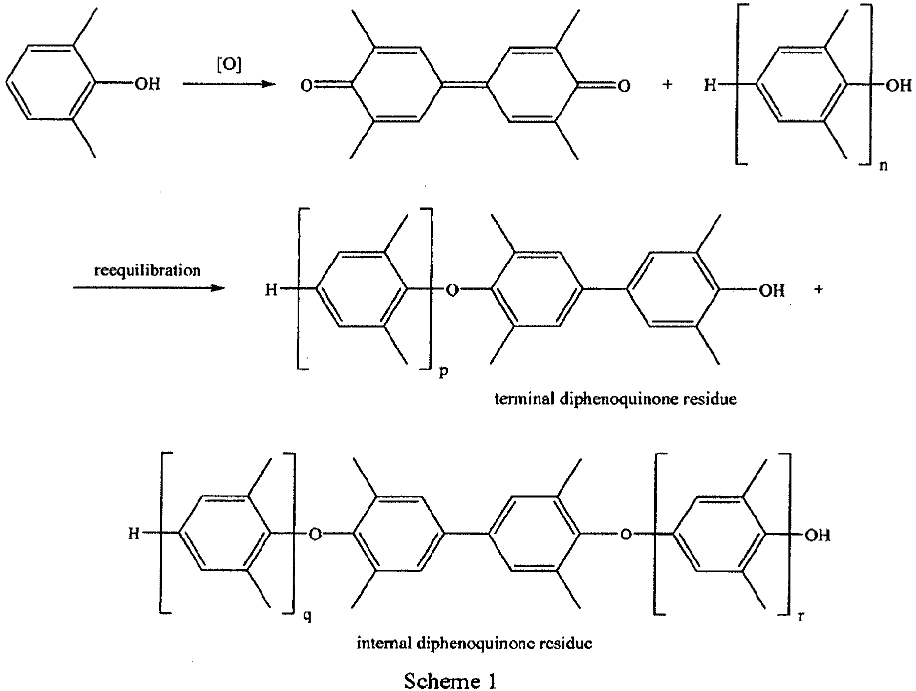 However, such reequilibration reduces the molecular weight of the poly(arylene ether) (e.g., p and q+r are less than n). Accordingly, when a higher molecular weight and/or process-stable molecular weight poly(arylene ether) is desired, it may be desirable to separate the diphenoquinone from the poly(arylene ether) rather than reequilibrating the diphenoquinone into the poly(arylene ether) chains. Such a separation can be achieved, for example, by precipitation of the poly(arylene ether) in a solvent or solvent mixture in which the poly(arylene ether) is insoluble and the diphenoquinone is soluble, while minimizing the time between the end of the polymerization reaction (e.g., termination of oxygen flow) and precipitation of the poly(arylene ether). For example, when a poly(arylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with about 1 to about 4 volumes of methanol or a methanol/water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the reequilibration of the diphenoquinone into the poly(arylene ether) chain can be minimized (e.g., by isolating the poly(arylene ether) no more than 200 minutes after termination of oxidative polymerization). These approaches are described in International Patent Application Publication No. WO2009/104107 A1 of Delsman et al. In an alternative approach utilizing the temperature-dependent solubility of diphenoquinone in toluene or a toluene/methanol mixture, a solution containing diphenoquinone and poly(arylene ether) can be adjusted to a temperature of about 25°C, and the insoluble diphenoquinone can be removed by solid-liquid separation (e.g., filtration).

In some embodiments, the poly(arylene ether) comprises 2,6-dimethyl-1,4-phenylene ether units, 2,3,6-trimethyl-1,4-phenylene ether units, or a combination thereof. In some embodiments, the poly(arylene ether) is a poly(2,6-dimethyl-1,4-phenylene ether). In some embodiments, the poly(arylene ether) comprises a poly(2,6-dimethyl-1,4-phenylene ether) having an intrinsic viscosity of about 0.35 to about 0.5 deciliter per gram, specifically about 0.35 to about 0.46 deciliter per gram, measured at 25°C in chloroform.

The poly(arylene ether) can comprise molecules having an aminoalkyl-containing end group, typically located in a position ortho to the hydroxy group. Thus, the poly(arylene ether) can, for example, comprise a 3-di-n-butylamino-5-methyl-4-hydroxyphenyl group (derived from reaction with di-n-butylamine as a catalyst component) or a 3-morpholino-5-methyl-4-hydroxyphenyl group (derived from reaction with morpholine as a catalyst component). Also frequently present are tetramethyldiphenoquinone (TMDQ) end groups, typically obtained from 2,6-dimethylphenol-containing reaction mixtures in which tetramethyldiphenoquinone by-product is present. In some embodiments the poly(arylene ether) comprises diphenoquinone residue in an amount of less than about 5 weight percent, specifically less than about 3 weight percent, more specifically less than about 1 weight percent, based on the weight of the poly(arylene ether). In some embodiments, the poly(arylene ether) comprises, on average, about 0.7 to about 2 moles, specifically about 1 to about 1.5 moles, of chain-terminal hydroxyl groups per mole of poly(arylene ether). The poly(arylene ether) can be in the form of a homopolymer, a copolymer, a graft copolymer, an ionomer, or a block copolymer, as well as combinations comprising at least one of the foregoing.

The thermoplastic composition comprises the poly(arylene ether) in an amount of 5 to 60 weight percent, based on the total weight of the thermoplastic composition. Within this range, the poly(arylene ether) amount can be about 10 to about 55 weight percent, specifically about 20 to about 50 weight percent, more specifically about 30 to about 45 weight percent, even more specifically about 35 to about 45 weight percent.

In addition to the poly(arylene ether), the thermoplastic composition comprises a hydrogenated block copolymer of an alkenyl aromatic compound and a conjugated diene. For brevity, this component is referred to as the "hydrogenated block copolymer". The hydrogenated block copolymer can comprise about 10 to about 90 weight percent of poly(alkenyl aromatic) content and about 90 to about 10 weight percent of hydrogenated poly(conjugated diene) content, based on the weight of the hydrogenated block copolymer. In some embodiments, the hydrogenated block copolymer is a low poly(alkenyl aromatic content) hydrogenated block copolymer in which the poly(alkenyl aromatic) content is about 10 to less than 40 weight percent, specifically about 20 to about 35 weight percent, more specifically about 25 to about 35 weight percent, yet more specifically about 30 to about 35 weight percent, all based on the weight of the low poly(alkenyl aromatic content) hydrogenated block copolymer. In other embodiments, the hydrogenated block copolymer is a high poly(alkenyl aromatic content) hydrogenated block copolymer in which the poly(alkenyl aromatic) content is 40 to about 90 weight percent, specifically about 50 to about 80 weight percent, more specifically about 60 to about 70 weight percent, all based on the weight of the high poly(alkenyl aromatic content) hydrogenated block copolymer. In some embodiments, the high poly(alkenyl aromatic) content hydrogenated block copolymer comprises 40 to about 50 weight percent of poly(alkenyl aromatic) content, based on the weight of the high poly(alkenyl aromatic) content hydrogenated block copolymer.

In some embodiments, the hydrogenated block copolymer has a weight average molecular weight of about 40,000 to about 400,000 atomic mass units. The number average molecular weight and the weight average molecular weight can be determined by gel permeation chromatography and based on comparison to polystyrene standards. In some embodiments, the hydrogenated block copolymer has a weight average molecular weight of about 200,000 to about 400,000 atomic mass units, specifically about 220,000 to about 350,000 atomic mass units. In other embodiments, the hydrogenated block copolymer can have a weight average molecular weight of about 40,000 to about 200,000 atomic mass units, specifically about 40,000 to about 180,000 atomic mass units, more specifically about 40,000 to about 150,000 atomic mass units.

The alkenyl aromatic monomer used to prepare the hydrogenated block copolymer can have the structure 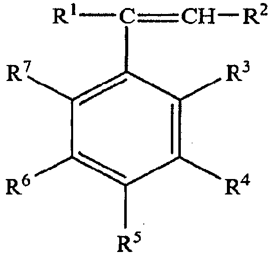 wherein R¹ and R² each independently represent a hydrogen atom, a C₁-C₈ alkyl group, or a C₂-C₈ alkenyl group; R³ and R⁷ each independently represent a hydrogen atom, a C₁-C₈ alkyl group, a chlorine atom, or a bromine atom; and R⁴, R⁵, and R⁶ each independently represent a hydrogen atom, a C₁-C₈ alkyl group, or a C₂-C₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In some embodiments, the alkenyl aromatic monomer is styrene.

The conjugated diene used to prepare the hydrogenated block copolymer can be a C₄-C₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene consists of 1,3-butadicnc.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, specifically at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In some embodiments, the hydrogenated block copolymer is a diblock copolymer, a triblock copolymer, or a combination thereof.

In some embodiments, the hydrogenated block copolymer excludes the residue of monomers other than the alkenyl aromatic compound and the conjugated diene.

In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms.

In some embodiments, the hydrogenated block copolymer includes the residue of one or more acid functionalizing agents, such as maleic anhydride.

In some embodiments, the hydrogenated block copolymer comprises a polystyrene-poly(ethylene-butylene)-polystyrene triblock copolymer.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Polymers as KRATON G1701 and G1702; the polystyrene-poly(ethylene-butylene)-polystyrene triblock copolymers available from Kraton Polymers as KRATON G1641, G1650, G1651, G1654, G1657, G1726, G4609, G4610, GRP-6598, RP-6924, MD-6932M, MD-6933, and MD-6939; the polystyrene-poly(ethylene-butylene-styrene)-polystyrene (S-EB/S-S) triblock copolymers available from Kraton Polymers as KRATON RP-6935 and RP-6936, the polystyrene-poly(ethylene-propylene)-polystyrene triblock copolymers available from Kraton Polymers as KRATON G1730; the maleic anhydride-grafted polystyrene-poly(ethylenebutylene)-polystyrene triblock copolymers available from Kraton Polymers as KRATON G1901, G1924, and MD-6684; the maleic anhydride-grafted polystyrene-poly(ethylenebutylene-styrene)-polystyrene triblock copolymer available from Kraton Polymers as KRATON MD-6670; the polystyrene-poly(ethylene-butylene)-polystyrene triblock copolymer comprising 67 weight percent polystyrene available from Asahi Kasei Elastomer as TUFTEC H1043; the polystyrene-poly(ethylene-butylene)-polystyrene triblock copolymer comprising 42 weight percent polystyrene available from Asahi Kasei Elastomer as TUFTEC H1051; the polystyrene-poly(butadicne-butylene)-polystyrene triblock copolymers available from Asahi Kasei Elastomer as TUFTEC P1000 and P2000; the hydrogenated radial block copolymers available from Chevron Phillips Chemical Company as K-Resin KK38, KR01, KR03, and KR05; the polystyrene-poly(ethylene-butylene)-polystyrene triblock copolymer comprising 60 weight polystyrene available from Kuraray as SEPTON S8104; the polystyrene-poly(ethylene-ethylene/propylene)-polystyrene triblock copolymers available from Kuraray as SEPTON S4044, S4055, S4077, and S4099; and the polystyrene-poly(ethylene-propylene)-polystyrene triblock copolymer comprising 65 weight percent polystyrene available from Kuraray as SEPTON S2104. Mixtures of two of more hydrogenated block copolymers can be used.

The thermoplastic composition comprises the hydrogenated block copolymer in an amount of 5 to 70 weight percent, based on the total weight of the thermoplastic composition. Within this range, the amount of hydrogenated block copolymer can be about 7 to about 60 weight percent, specifically about 9 to about 50, more specifically about 10 to about 40 weight percent, still more specifically about 10 to about 30 weight percent, even specifically about 10 to about 20 weight percent, yet more specifically 10 to 15 weight percent.

In some embodiments, the thermoplastic composition comprises at least 3 weight percent, based on the total weight of the composition, of a high poly(alkenyl aromatic) content hydrogenated block copolymer comprising 40 to 90 weight percent of poly(alkenyl aromatic) content, based on the weight of the high poly(alkenyl aromatic) content hydrogenated block copolymer. In some embodiments, the amount of the high poly(alkcnyl aromatic) content hydrogenated block copolymer can be about 3 to about 20 weight percent, specifically about 5 to about 15 weight percent, more specifically about 10 to about 15 weight percent, all based on the total weight of the thermoplastic composition. In some embodiments, the poly(alkenyl aromatic) content of the high poly(alkenyl aromatic) content hydrogenated block copolymer is about 50 to about 80 weight percent, specifically about 60 to about 70 weight percent, based on the weight of the high poly(alkenyl aromatic) content hydrogenated block copolymer. In other embodiments, the poly(alkenyl aromatic) content of the high poly(alkenyl aromatic) content hydrogenated block copolymer is about 40 to about 50 weight percent, based on the weight of the high poly(alkenyl aromatic) content hydrogenated block copolymer.

In some embodiments, the thermoplastic composition comprises about 10 to about 15 weight percent of the hydrogenated block copolymer, which includes about 5 to about 15 weight percent of a high poly(alkenyl aromatic) content hydrogenated block copolymer, all based on the total weight of the thermoplastic composition. The high poly(alkenyl aromatic) content hydrogenated block copolymer can comprise 40 to about 50 weight percent of poly(alkenyl aromatic) content, based on the weight of the high poly(alkenyl aromatic) content hydrogenated block copolymer.

In addition to the poly(arylene ether) and the hydrogenated block copolymer, the thermoplastic composition comprises a flame retardant. A flame retardant is a chemical compound or mixture of chemical compounds capable of improving the flame retardancy of the thermoplastic composition. Suitable flame retardants include organophosphate esters, metal dialkylphosphinates, nitrogen-containing flame retardants, metal hydroxides, and mixtures thereof.

In some embodiments, the flame retardant comprises an organophosphate ester. Exemplary organophosphate ester flame retardants include phosphate esters comprising phenyl groups, substituted phenyl groups, or a combination of phenyl groups and substituted phenyl groups; and bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), and mixtures of two or more of the foregoing organophosphate esters.

In some embodiments the organophosphate ester comprises a bis-aryl phosphate having the formula 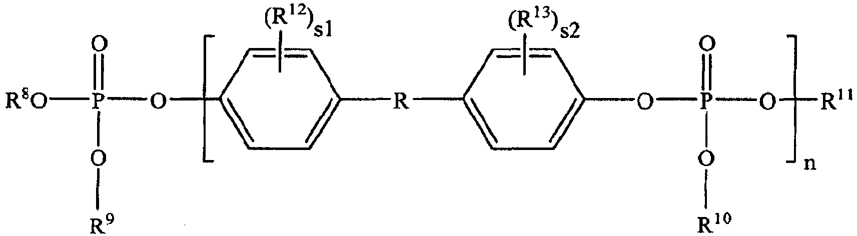 wherein R is independently at each occurrence a C₁-C₁₂ alkylene group; R¹² and R¹³ are independently at each occurrence a C₁-C₅ alkyl group; R⁸, R⁹, and R¹¹ are independently a C₁-C₁₂ hydrocarbyl group; R¹⁰ is independently at each occurrence a C₁-C₁₂ hydrocarbyl group; n is 1 to 25; and s1 and s2 are independently an integer equal to 0, 1, or 2. In some embodiments OR⁸, OR⁹, OR¹⁰ and OR¹¹ are independently derived from phenol, a monoalkylphenol, a dialkylphenol or a trialkylphenol.

As readily appreciated by one of ordinary skill in the art, the bis-aryl phosphate is derived from a bisphenol. Exemplary bisphenols include 2,2-bis(4-hydroxyphenyl)propane (bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In some embodiments, the bisphenol comprises bisphenol A.

In some embodiments, the flame retardant comprises a metal dialkylphosphinate. As used herein, the term "metal dialkylphosphinate" refers to a salt comprising at least one metal cation and at least one dialkylphosphinate anion. In some embodiments, the metal dialkylphosphinate has the formula 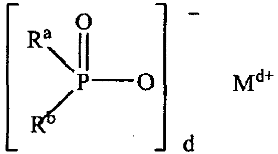 wherein R^{a} and R^{b} are each independently C₁-C₆ alkyl; M is calcium, magnesium, aluminum, or zinc; and d is 2 or 3. Examples of R^{a} and R^{b} include methyl, ethyl, n-propyl, isopropyl, n-butyl, tert-butyl, n-pentyl, and phenyl. In some embodiments, R³ and R^{b} are ethyl, M is aluminum, and d is 3 (that is, the metal dialkylphosphinate is aluminum tris(diethylphosphinate)).

In some embodiments, the metal dialkylphosphinate is in particulate form. The metal dialkylphosphinate particles can have a median particle diameter (D50) less than or equal to 40 micrometers, or, more specifically, a D50 less than or equal to 30 micrometers, or, even more specifically, a D50 less than or equal to 25 micrometers. Additionally, the metal dialkylphosphinate can be combined with a polymer, such as a poly(arylene ether), a polyolefin, a polyamide, a block copolymer, or combination thereof, to form a masterbatch. The metal dialkylphosphinate masterbatch comprises the metal dialkylphosphinate in an amount greater than is present in the thermoplastic composition. Employing a masterbatch for the addition of the metal dialkylphosphinate to the other components of the composition can facilitate addition and improve distribution of the metal dialkylphosphinate.

In some embodiments, the flame retardant comprises a nitrogen-containing flame retardant comprising a nitrogen-containing heterocyclic base and a phosphate or pyrophosphate or polyphosphate acid. In some embodiments, the nitrogen-containing flame retardant has the formula 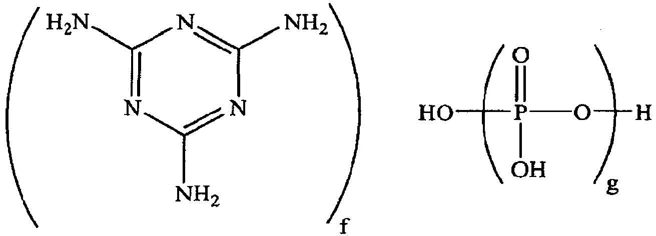 whereingis 1 to 10,000, and the ratio offtogis 0.5:1 to 1.7:1, specifically 0.7:1 to 1.3:1, more specifically 0.9:1 to 1.1:1. It will be understood that this formula includes species in which one or more protons are transferred from the phosphate group(s) to the melamine group(s). When g is 1, the nitrogen-containing flame retardant is melamine phosphate (CAS Reg. No. 20208-95-1). When g is 2, the nitrogen-containing flame retardant is melamine pyrophosphate (CAS Reg. No. 15541 60-3). When g is, on average, greater than 2, the nitrogen-containing flame retardant is a melamine polyphosphate (CAS Reg. No. 56386-64-2). In some embodiments, the nitrogen-containing flame retardant is melamine pyrophosphate, melamine polyphosphate, or a mixture thereof. In some embodiments in which the nitrogen-containing flame retardant is melamine polyphosphate, g has an average value of greater than 2 to 10,000, specifically 5 to 1,000, more specifically 10 to 500. In some embodiments in which the nitrogen-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates can be prepared by reacting polyphosphoric acid and melamine, as described, for example, in U.S. Pat. No. 6,025,419 to Kasowski et al., or by heating melamine pyrophosphate under nitrogen at 290°C to constant weight, as described in International Patent Application No. WO 98/08898 A1 to Jacobson et al. In some embodiments, the nitrogen-containing flame retardant comprises melamine cyanurate.

The nitrogen-containing flame retardant can have a low volatility. For example, in some embodiments, the nitrogen-containing flame retardant exhibits less than 1 percent weight loss by thermogravimetric analysis when heated at a rate of 20°C per minute from 25 to 280°C, specifically 25 to 300°C, more specifically 25 to 320°C.

In some embodiments, the flame retardant comprises a metal hydroxide. Suitable metal hydroxides include all those capable of providing fire retardancy, as well as combinations of such metal hydroxides. The metal hydroxide can be chosen to have substantially no decomposition during processing of the fire additive composition and/or flame retardant thermoplastic composition. Substantially no decomposition is defined herein as amounts of decomposition that do not prevent the flame retardant additive composition from providing the desired level of fire retardancy. Exemplary metal hydroxides include, but are not limited to, magnesium hydroxide (for example, CAS Reg. No. 1309-42-8), aluminum hydroxide (for example, CAS Reg. No. 21645-51-2), cobalt hydroxide (for example, CAS Reg. No. 21041-93-0), and combinations thereof. In some embodiments, the metal hydroxide comprises magnesium hydroxide. In some embodiments the metal hydroxide has an average particle size less than or equal to 10 micrometers and/or a purity greater than or equal to 90 weight percent. In some embodiments it is desirable for the metal hydroxide to contain substantially no water, for example as evidenced by a weight loss of less than 1 weight percent upon drying at 120°C for 1 hour. In some embodiments the metal hydroxide can be coated, for example, with stearic acid or other fatty acid.

In some embodiments, the flame retardant comprises an organophosphate ester. In some embodiments, the flame retardant consists of one or more organophosphate esters.

In some embodiments, the flame retardant comprises a metal phosphinate.

In some embodiments, the flame retardant comprises melamine cyanurate.

In some embodiments, the flame retardant comprises an organophosphate ester and melamine cyanurate.

The thermoplastic composition comprises the flame retardant in an amount of 2 to 40 weight percent, based on the total weight of the composition. Within this range, the flame retardant amount can be about 4 to about 30 weight percent, specifically about 7 to about 20 weight percent, more specifically about 7 to about 12 weight percent.

In addition to the poly(arylene ether), the hydrogenated block copolymer, and the flame retardant, the thermoplastic composition can, optionally, further comprise a polyolefin. Polyolefins include polyethylenes (including high density polyethylene (HDPE), low density polyethylene (LDPE), medium density polyethylene (MDPE), and linear low density polyethylene (LLDPE)), polypropylenes (including atactic, syndiotactic, and isotactic polypropylenes), and polyisobutylenes. Polyolefins and methods for their preparation are known in the art and are described for example in U.S. Patent Nos. 2,933,480 to Gresham et al., 3,093,621 to Gladding, 3,211,709 to Adamek et al., 3,646,168 to Barrett, 3,790,519 to Wahlborg, 3,884,993 to Gros, 3,894,999 to Boozer et al., and 4,059,654 to von Bodungen. In some embodiments the polyolefin consists essentially of a polyolefin homopolymer, specifically a crystalline polyolefin homopolymer. The density of polyethylene (HDPE, LDPE, MDPE, LLDPE) can be 0.90 gram/cm³ to 0.98 gram/cm³.

Polyolefins include ethylene/α-olefin copolymers, such as copolymers of ethylene and 1-butene, copolymers of ethylene and 1-hexene, and copolymers of ethylene and 1-octene. Additionally, copolymers of olefins can also be used, such as copolymers of polypropylene with rubber and polyethylene with rubber. Copolymers of polypropylene and rubber are sometimes referred to as impact modified polypropylene. Such copolymers are typically heterophasic and have sufficiently long sections of each component to have both amorphous and crystalline phases. In some embodiments the polyolefin comprises a polyolefin block copolymer comprising an end group consisting essentially of a polyolefin homopolymer of C₂ to C₃ olefins and a middle block comprising a copolymer of C₂ to C₁₂ olefins. Additionally the polyolefin can comprise a combination of homopolymer and copolymer, a combination of homopolymers having different melt temperatures, and/or a combination of homopolymers having a different melt flow rate.

In some embodiments, the polyolefin comprises a high density polyethylene (HDPE). The high density polyethylene can have a density of 0.941 to 0.965 grams per milliliter.

In some embodiments, the polyolefin has a melt flow rate (MFR) of about 0.3 to about 10 grams per ten minutes (g/10 min). Specifically, the melt flow rate can be about 0.3 to about 5 grams per ten minutes. Melt flow rate can be determined according to ASTM D1238-10 using either powdered or pelletized polyolefin, a load of 2.16 kilograms and a temperature suitable for the polyolefin (190°C for ethylene-based polyolefins and 230°C for propylene-based polyolefins).

In some embodiments, the polyolefin comprises homopolyethylene or a polyethylene copolymer. Additionally the polyethylene can comprise a combination of homopolymer and copolymer, a combination of homopolymers having different melting temperatures, and/or a combination of homopolymers having different melt flow rates. The polyethylene can have a density of 0.911 to 0.98 grams per cubic centimeter.

In some embodiments, a mixture of different types of polyolefins can be used.

In some embodiments, a mixture of polyethylenes with different densities can be used.

In some embodiments, the polyolefn is selected from the group consisting of propylene homopolymers, ethylene/α-olefin copolymers, and mixtures thereof.

In some embodiments, the polyolefin comprises an ethylene/1-hexene copolymer.

When present in the thermoplastic composition, the polyolefin can be used in an amount of 2 to 45 weight percent, based on the total weight of the thermoplastic composition. Within this range the amount of polyolefin can be about 5 to about 42 weight percent, specifically about 10 to about 39 weight percent, more specifically about 20 to about 39 weight percent, even more specifically about 30 to about 39 weight percent.

In some embodiments, when the thermoplastic composition comprises greater than or equal to 15 weight percent polyethylene, based on the total weight of the thermoplastic composition. The thermoplastic composition can comprise less than or equal to 10 weight percent of polypropylene, specifically less than 7 weight percent of polypropylene, more specifically less than or equal to 5 weight percent polypropylene, still more specifically less than 3 weight percent of polypropylene resin, based on the total weight of thermoplastic composition.

The thermoplastic composition can, optionally, further comprise one or more additives known in the thermoplastics art. For example, the thermoplastic composition can, optionally, further comprise an additive chosen from stabilizers, antioxidants, processing aids, drip retardants, nucleating agents, UV blockers, dyes, pigments, fragrances, anti-static agents, metal deactivators, antiblocking agents, and the like, and combinations thereof. When present, additives are typically used in a total amount of about 0.5 to 10 weight percent, based on the total weight of the thermoplastic composition. In some embodiments, the composition excludes such additives.

Components not taught herein as required can, optionally, be excluded from the thermoplastic composition. For example, in some embodiments, the thermoplastic composition excludes any polymer other than the poly(arylene ether), the polyolefin, the hydrogenated block copolymer, and the flame retardant. In some embodiments, the poly(arylene ether) composition excludes one or more of polyamides, polyesters, homopolymers of alkenyl aromatic monomers (such as homopolystyrene), poly(phenylene sulfide)s, unhydrogenated block copolymers of an alkenyl aromatic and a conjugated diene, and rubber-modified polystyrenes (also known as high-impact polystyrenes).

In some embodiments, the thermoplastic composition excludes fillers. It will be understood that the exclusion of filler does not exclude small amounts (for example, less than 10 weight percent, specifically less than 5 weight percent) of mineral pigments, such as titanium dioxide, when used to color the thermoplastic composition. In some embodiments, the poly(arylene ether) composition comprises no carbon black. In some embodiments, the thermoplastic composition excludes electrically conductive agents, such as metal particles or fibers, carbon nanotubes, and electrically conductive carbon blacks.

In a very specific embodiment of the method, the die insert comprises at least four helical channels; the thermoplastic composition comprises 37 to 55 weight percent of the poly(arylene ether), 7 to 15 weight percent of the hydrogenated block copolymer, and 7 to 12 weight percent of the flame retardant; the poly(arylene ether) comprises a poly(2,6-dimethyl-1,4-phenylene ether) having an intrinsic viscosity of 0.40 to 0.50 deciliter per gram measured in chloroform at 25°C; the thermoplastic composition further comprises a polyolefin selected from the group consisting of propylene homopolymers, ethylene/a-olefin copolymers, and mixtures thereof; the hydrogenated block copolymer comprises at least 5 to 15 weight percent, based on the total weight of the thermoplastic composition, of a high poly(alkenyl aromatic) content hydrogenated block copolymer comprising 40 to 90 weight percent, based on the weight of the high poly(alkenyl aromatic) content hydrogenated block copolymer, of poly(alkenyl aromatic) content; the hydrogenated block copolymer comprises 5 to 15 weight percent of a high poly(alkenyl aromatic) content hydrogenated block copolymer; the flame retardant consists of one or more organophosphate esters; and the thermoplastic composition further comprises 25 to 39 weight percent of a polyolefin selected from the group consisting of propylene homopolymers, ethylene/α-olefin copolymers, and mixtures thereof. With the range of 40 to 90 weight percent, based on the weight of the high poly(alkcnyl aromatic) content hydrogenated block copolymer, the poly(alkenyl aromatic) content can be about 50 to about 80 weight percent, specifically about 60 to about 70 weight percent. In some embodiments, the coated conductor passes the Class C Temperature and Humidity Cycling test of ISO 6722 (2006), Section 11.6.

In another very specific embodiment of the method, the die insert comprises at least four helical channels; the thermoplastic composition comprises 35 to 45 weight percent of the poly(arylene ether), 10 to 16 weight percent of the hydrogenated block copolymer, and 7 to 12 weight percent of the flame retardant; the poly(arylene ether) comprises a poly(2,6-dimethyl-1,4-phenylene ether) having an intrinsic viscosity of 0.40 to 0.50 deciliter per gram measured in chloroform at 25°C; the hydrogenated block copolymer comprises 10 to 16 weight percent of a high poly(alkenyl aromatic) content hydrogenated block copolymer; the hydrogenated block copolymer comprises 10 to 16 weight percent, based on the total weight of the thermoplastic composition, of a high poly(alkenyl aromatic) content hydrogenated block copolymer comprising 40 to 50 weight percent, based on the weight of the high poly(alkenyl aromatic) content hydrogenated block copolymer, of poly(alkenyl aromatic) content; the flame retardant consists of one or more organophosphate esters; and the thermoplastic composition further comprises 30 to 40 weight percent of a polyolefin comprising an ethylene/1-hexene copolymer. In some embodiments, the coated conductor passes the Class C Long-Term Heat Ageing test of ISO 6722(2006), Section 10.1 and the Class C Temperature and Humidity Cycling test of ISO 6722 (2006), Section 11.6.

Further described is a coated conductor (not claimed) formed by any of the above-described embodiments. For example, one embodiment is a coated conductor, comprising: a conductor; and an insulating layer disposed on the conductor; wherein the insulating layer comprises a thermoplastic composition comprising about 5 to about 60 weight percent of a poly(arylene ether), about 5 to about 70 weight percent of a hydrogenated block copolymer of an alkenyl aromatic compound and conjugated diene, and about 2 to about 40 weight percent of a flame retardant; wherein all weight percent values are based on the total weight of the thermoplastic composition unless another basis is specified; and wherein the insulating layer viewed in cross section comprises at least two weld lines, specifically at least three weld lines, more specifically at least four weld lines. Within the range of about 5 to about 60 weight percent, based on the total weight of the thermoplastic composition, the poly(arylene ether) amount can be about 10 to about 55 weight percent, specifically about 20 to about 50 weight percent, more specifically about 30 to about 45 weight percent, even more specifically about 35 to about 45 weight percent. Within the range of about 5 to about 70 weight percent, based on the total weight of the thermoplastic composition, the hydrogenated block copolymer amount can be about 7 to about 60 weight percent, specifically about 9 to about 50 weight percent, more specifically about 10 to about 40 weight percent, even more specifically about 10 to about 30 weight percent, yet more specifically about 10 to about 20 weight percent, even more specifically about 10 to about 15 weight percent. Within the range of about 2 to about 40 weight percent, based on the total weight of the composition, the flame retardant amount can be about 40 to about 30 weight percent, specifically about 7 to about 20 weight percent, more specifically about 7 to about 12 weight percent.

All of the compositional and structural variations described above in the context of the method apply as well to the coated conductor.

The invention includes at least the following embodiments.

Embodiment 1: A method of forming a coated conductor, comprising: extruding a thermoplastic composition through a crosshead die apparatus to extrusion coat a conductor with the thermoplastic composition, thereby forming a coated conductor comprising the conductor and an insulating layer disposed on the conductor; wherein the crosshead die apparatus comprises a die, and a die insert comprising a helical channel; wherein said extruding comprises a movement of the thermoplastic composition through the helical channel toward the die; and wherein the thermoplastic composition comprises 5 to 60 weight percent of a poly(arylene ether), 5 to 70 weight percent of a hydrogenated block copolymer of an alkenyl aromatic compound and conjugated diene, and 2 to 40 weight percent of a flame retardant; wherein all weight percent values are based on the total weight of the thermoplastic composition unless another basis is specified.

Embodiment 2: The method of embodiment 1, wherein the die insert comprises at least two helical channels.

Embodiment 3: The method of embodiment 1 or 2, wherein the insulating layer viewed in cross section comprises at least two weld lines.

Embodiment 4: The method of any of embodiments 1-3, wherein the helical channel defines an axis of a helix, and wherein the helical channel comprises at least 0.5 rotation about the axis of the helix.

Embodiment 5: The method of any of embodiments 1-4, wherein the die insert further comprises a retrograde channel in fluid communication with the helical channel; and wherein said extruding comprises a movement of the thermoplastic composition through the retrograde channel prior to said movement through the helical channel.

Embodiment 6: The method of any of embodiments 1-5, wherein said extruding a thermoplastic composition comprises extruding the thermoplastic composition at a temperature of 255 to 310°C.

Embodiment 7: The method of any of embodiments 1-6, wherein the poly(arylene ether) comprises a poly(2,6-dimethyl-1,4-phenylene ether) having an intrinsic viscosity of about 0.4 to about 0.5 deciliter per gram measured in chloroform at 25°C.

Embodiment 8: The method of any of embodiments 1-7, wherein the thermoplastic composition comprises 10 to 15 weight percent of the hydrogenated block copolymer.

Embodiment 9: The method of any of embodiments 1-8, wherein the hydrogenated block copolymer comprises at least 3 weight percent, based on the total weight of the thermoplastic composition, of a high poly(alkenyl aromatic) content hydrogenated block copolymer comprising 40 to 90 weight percent, based on the weight of the high poly(alkenyl aromatic) content hydrogenated block copolymer, of poly(alkenyl aromatic) content.

Embodiment 10: The method of any of embodiments 1-9, wherein the hydrogenated block copolymer comprises about 10 to about 15 weight percent, based on the total weight of the thermoplastic composition, of a high poly(alkenyl aromatic) content hydrogenated block copolymer comprising 40 to about 50 weight percent, based on the weight of the high poly(alkenyl aromatic) content hydrogenated block copolymer, of poly(alkenyl aromatic) content.

Embodiment 11: The method of any of embodiments 1-10, wherein the flame retardant is selected from the group consisting of organophosphate esters, metal dialkylphosphinates, nitrogen-containing flame retardants, metal hydroxides, and mixtures thereof.

Embodiment 12: The method of any of embodiments 1-1 l, wherein the flame retardant comprises an organophosphate ester.

Embodiment 13: The method of any of embodiments 1-12, wherein the flame retardant consists of one or more organophosphate esters.

Embodiment 14: The method of any of embodiments 1-11, wherein the flame retardant comprises a metal phosphinate.

Embodiment 15: The method of any of embodiments 1-12 and 14, wherein the flame retardant comprises melamine cyanurate.

Embodiment 16: The method of any of embodiments 1-12, 14, and 15, wherein the flame retardant comprises an organophosphate ester and melamine cyanurate.

Embodiment 17: The method of any of embodiments 1-16, wherein the thermoplastic composition further comprises 2 to 45 weight percent of a polyolefin.

Embodiment 18: The method of embodiment 17, wherein the polyolefin is selected from the group consisting of propylene homopolymers, ethylene/α-olefin copolymers, and mixtures thereof.

Embodiment 19: The method of embodiment 17 or 18, wherein the polyolefin comprises an ethylene/1-hexene copolymer.

Embodiment 20: The method of embodiment 1, wherein the die insert comprises at least four helical channels; wherein the thermoplastic composition comprises 37 to 55 weight percent of the poly(arylene ether), 7 to 15 weight percent of the hydrogenated block copolymer, and 7 to 12 weight percent of the flame retardant; wherein the poly(arylene ether) comprises a poly(2,6-dimethyl-1,4-phenylene ether) having an intrinsic viscosity of 0.40 to 0.50 deciliter per gram measured in chloroform at 25°C; wherein the hydrogenated block copolymer comprises at least 5 to 15 weight percent, based on the total weight of the thermoplastic composition, of a high poly(alkenyl aromatic) content hydrogenated block copolymer comprising 40 to 90 weight percent, based on the weight of the high poly(alkenyl aromatic) content hydrogenated block copolymer, of poly(alkenyl aromatic) content; wherein the hydrogenated block copolymer comprises 5 to 15 weight percent of a high poly(alkenyl aromatic) content hydrogenated block copolymer; wherein the flame retardant consists of one or more organophosphate esters; and wherein the thermoplastic composition further comprises 25 to 39 weight percent of a polyolefin selected from the group consisting of propylene homopolymers, ethylene/α-olefin copolymers, and mixtures thereof.

Embodiment 21: The method of embodiment 20, wherein the coated conductor passes the Class C Temperature and Humidity Cycling test of ISO 6722 (2006), Section 11.6.

Embodiment 22: The method of embodiment 1, wherein the die insert comprises at least four helical channels; wherein the thermoplastic composition comprises 35 to 45 weight percent of the poly(arylene ether), 10 to 16 weight percent of the hydrogenated block copolymer, and 7 to 12 weight percent of the flame retardant; wherein the poly(arylene ether) comprises a poly(2,6-dimethyl-1,4-phenylene ether) having an intrinsic viscosity of 0.40 to 0.50 deciliter per gram measured in chloroform at 25°C; wherein the hydrogenated block copolymer comprises 10 to 16 weight percent of a high poly(alkenyl aromatic) content hydrogenated block copolymer; wherein the hydrogenated block copolymer comprises 10 to 16 weight percent, based on the total weight of the thermoplastic composition, of a high poly(alkenyl aromatic) content hydrogenated block copolymer comprising 40 to 50 weight percent, based on the weight of the high poly(alkenyl aromatic) content hydrogenated block copolymer, of poly(alkenyl aromatic) content; wherein the flame retardant consists of one or more organophosphate esters; and wherein the thermoplastic composition further comprises 30 to 40 weight percent of a polyolefin comprising an ethylene/1-hexene copolymer.

Embodiment 23: The method of embodiment 22, wherein the coated conductor passes the Class C Long-Term Heat Ageing test of ISO 6722(2006), Section 10.1 and the Class C Temperature and Humidity Cycling test of ISO 6722 (2006), Section 11.6.

The embodiments 24 to 42 described hereinafter do not fall under the claims.

Embodiment 24: A coated conductor, comprising: a conductor; and an insulating layer disposed on the conductor; wherein the insulating layer comprises a thermoplastic composition comprising about 5 to about 60 weight percent of a poly(arylene ether), about 5 to about 70 weight percent of a hydrogenated block copolymer of an alkenyl aromatic compound and conjugated diene, and about 2 to about 40 weight percent of a flame retardant; wherein all weight percent values are based on the total weight of the thermoplastic composition unless another basis is specified; and wherein the insulating layer viewed in cross section comprises at least two weld lines.

Embodiment 25: The coated conductor of embodiment 24, wherein the insulating layer viewed in cross section comprises at least four weld lines.

Embodiment 26: The coated conductor of embodiment 24 or 25, wherein the poly(arylene ether) comprises a poly(2,6-dimethyl-1,4-phenylene ether) having an intrinsic viscosity of about 0.4 to about 0.5 deciliter per gram measured in chloroform at 25°C.

Embodiment 27: The coated conductor of any of embodiments 24-26, wherein the thermoplastic composition comprises about 10 to about 15 weight percent of the hydrogenated block copolymer.

Embodiment 28: The coated conductor of any of embodiments 24-27, wherein the hydrogenated block copolymer comprises at least about 3 weight percent, based on the total weight of the thermoplastic composition, of a high poly(alkenyl aromatic) content hydrogenated block copolymer comprising 40 to about 90 weight percent, based on the weight of the high poly(alkenyl aromatic) content hydrogenated block copolymer, of poly(alkenyl aromatic) content.

Embodiment 29: The coated conductor of any of embodiments 24-28, wherein the hydrogenated block copolymer comprises about 10 to about 15 weight percent, based on the total weight of the thermoplastic composition, of a high poly(alkenyl aromatic) content hydrogenated block copolymer comprising 40 to about 50 weight percent, based on the weight of the high poly(alkenyl aromatic) content hydrogenated block copolymer, of poly(alkenyl aromatic) content.

Embodiment 30: The coated conductor of any of embodiments 24-29, wherein the flame retardant is selected from the group consisting of organophosphate esters, metal dialkylphosphinates, nitrogen-containing flame retardants, metal hydroxides, and mixtures thereof.

Embodiment 31: The coated conductor of any of embodiments 24-30, wherein the flame retardant comprises an organophosphate ester.

Embodiment 32: The coated conductor of any of embodiments 24-31, wherein the flame retardant consists of one or more organophosphate esters.

Embodiment 33: The coated conductor of any of embodiments 24-31, wherein the flame retardant comprises a metal phosphinate.

Embodiment 34: The coated conductor of any of embodiments 24-31 and 33, wherein the flame retardant comprises melamine cyanurate.

Embodiment 35: The coated conductor of any of embodiments 24-31, 33, and 34, wherein the flame retardant comprises an organophosphate ester and melamine cyanurate.

Embodiment 36: The coated conductor of any of embodiments 24-35, wherein the thermoplastic composition further comprises about 2 to about 45 weight percent of a polyolefin,

Embodiment 37: The coated conductor of embodiment 36, wherein the polyolefin is selected from the group consisting of propylene homopolymers, ethylene/α-olefin copolymers, and mixtures thereof.

Embodiment 38: The coated conductor of embodiment 36 or 37, wherein the polyolefin comprises an ethylene/1-hexene copolymer.

Embodiment 39: The coated conductor of embodiment 24, wherein the thermoplastic composition comprises about 37 to about 55 weight percent of the poly(arylene ether), about 7 to about 15 weight percent of the hydrogenated block copolymer, and about 7 to about 12 weight percent of the flame retardant; wherein the poly(arylene ether) comprises a poly(2,6-dimethyl-1,4-phenylene ether) having an intrinsic viscosity of about 0.40 to about 0.50 deciliter per gram measured in chloroform at 25°C; wherein the hydrogenated block copolymer comprises at least about 5 to about 15 weight percent, based on the total weight of the thermoplastic composition, of a high poly(alkenyl aromatic) content hydrogenated block copolymer comprising 40 to about 90 weight percent, based on the weight of the high poly(alkenyl aromatic) content hydrogenated block copolymer, of poly(alkenyl aromatic) content; wherein the hydrogenated block copolymer comprises about 5 to about 15 weight percent of a high poly(alkenyl aromatic) content hydrogenated block copolymer; wherein the flame retardant consists of one or more organophosphate esters; wherein the thermoplastic composition further comprises about 25 to about 39 weight percent of a polyolefin selected from the group consisting of propylene homopolymers, ethylene/α-olefin copolymers, and mixtures thereof; wherein the insulating layer viewed in cross section comprises at least four weld lines.

Embodiment 40: The coated conductor of embodiment 39, wherein the coated conductor passes the Class C Temperature and Humidity Cycling test of ISO 6722 (2006), Section 11.6.

Embodiment 41: The coated conductor of embodiment 24, wherein the thermoplastic composition comprises about 35 to about 45 weight percent of the poly(arylene ether), about 10 to about 16 weight percent of the hydrogenated block copolymer, and about 7 to about 12 weight percent of the flame retardant; wherein the poly(arylene ether) comprises a poly(2,6-dimethyl-1,4-phenylene ether) having an intrinsic viscosity of about 0.40 to about 0.50 deciliter per gram measured in chloroform at 25°C; wherein the hydrogenated block copolymer comprises about 10 to about 16 weight percent of a high poly(alkenyl aromatic) content hydrogenated block copolymer; wherein the hydrogenated block copolymer comprises about 10 to about 16 weight percent, based on the total weight of the thermoplastic composition, of a high poly(alkenyl aromatic) content hydrogenated block copolymer comprising 40 to about 50 weight percent, based on the weight of the high poly(alkenyl aromatic) content hydrogenated block copolymer, of poly(alkenyl aromatic) content; wherein the flame retardant consists of one or more organophosphate esters; wherein the thermoplastic composition further comprises about 30 to about 40 weight percent of a polyolefin comprising an ethylene/1-hexene copolymer; and wherein the insulating layer viewed in cross section comprises at least four weld lines.

Embodiment 42: The coated conductor of embodiment 41, wherein the coated conductor passes the Class C Long-Term Heat Ageing test of ISO 6722(2006), Section 10.1 and the Class C Temperature and Humidity Cycling test of ISO 6722 (2006), Section 11.6.

The invention is further illustrated by the following examples.

### EXAMPLES 1 AND 2, COMPARATIVE EXAMPLES 1-6

These examples illustrate the unexpected, synergistic benefit of combining a poly(arylene ether)-polyolefin composition and an extrusion coating method utilizing a die insert with helical channels. Relative to a heat-sleeve die insert, the die insert with helical channels provides a substantial improvement in the aging properties of a coated conductor comprising a poly(arylene ether)-containing insulating layer. The same improvement is not observed with a coated conductor comprising a poly(vinyl chloride) insulating layer, or a coated conductor comprising a polyolefin insulating layer.

Components used to prepare the coating compositions are summarized in Table 1.

**Table 1**

| Component | Description |
|---|---|
| PPE 0.46 | Poly(2,6-dimethyl-1,4-phenylene ether), CAS Reg. No. 25134-01-4, having an intrinsic viscosity of 0.46 deciliter per gram as measured in chloroform at 25°C; obtained in powder form as PPO 800 from SABIC Innovative Plastics. |
| PP | Propylene homopolymer, CAS Reg. No. 9003-07-0, having a melt mass-flow rate of 1.3 grams per 10 minutes measured at 230°C and 2.16 kilogram load; obtained as D015-C2 from Sunoco. |
| HDPE 5305E | Ethylene/1-hexene copolymer with a melt mass-flow rate of 0.7 grams per 10 minutes and a specific gravity of 0.943; obtained as PETROTHENE LR 5900-00 from Equistar. |
| POE | An ethylene/1-octene copolymer having a melt mass-flow rate of 0.5 grams per 10 minutes measured at 190°C and 2.16 kilogram load, and a density of 0.863 gram per cubic centimeter; obtained as ENGAGE 8180 from Dow. |
| LLDPE GA837091 | Ethylene/1-hexene copolymer having a with melt mass-flow rate of 0.75 grams per 10 minutes and a specific gravity of 0.934 grams per cubic centimeter; obtained as PETROTHENE GA837091 from Equistar. |
| LLDPE GA818073 | Ethylene/1-butene copolymer having a melt mass-flow rate of 0.75 grams per 10 minutes and a specific gravity of 0.9205; obtained as PETROTHENE GA818073 from Equistar. |
| SEBS KG1650 | A polystyrene-poly(ethylene/butylene)-polystyrene triblock copolymer having a polystyrene content of 32 weight percent; obtained as KRATON G1650 from Kraton Polymers. |
| SEBS H1043 | A polystyrene-poly(ethylene/butylene)-polystyrene triblock copolymer having a polystyrene content of 67 weight percent; obtained as TUFTEC H1043 from Asahi Chemical. |
| SEBS H1051 | A polystyrene-poly(ethylene/butylene)-polystyrene triblock copolymer having a polystyrene content of about 42 weight percent and a poly(ethylene/butylene) content of about 58 weight percent; obtained as TUFTEC H1051 from Asahi Chemical. |
| SEBS RP6936 | A polystyrene-poly(ethylene/butylene)-polystyrene triblock copolymer having a polystyrene content of 39 weight percent; obtained as RP6936 from Kraton Polymers. |
| BPADP | Bisphenol A bis(diphenyl phosphate), CAS Reg. No. 181028-79-5, obtained from Supresta. |
| PVC | A commercial product consisting primarily of poly(vinyl chloride), CAS Reg. No. 9002-86-2, the commercial product having a density of 1.3 grams per cubic centimeter at 25°C; obtained as PVC 4501 from Georgia Gulf. |
| FR-PE | A flame-retardant polyethylene-based material having a specific density of about 1.36 gram per cubic centimeter at 25°C and a melt mass flow rate of 2.3 grams per ten minutes measured at 230°C and 10 kilograms load; obtained as Trinity FR SC560 from Riken. |

Compositions A-D used for extrusion coating of the conductor are summarized in Table 2, where component amounts are in parts by weight. The six poly(arylene ether) compositions A-F were prepared from individual components as follows. Components were combined in a twin-screw extruder. The poly(arylene ether) and block copolymers were added at the feedthroat of the extruder, and the polyolefin was added downstream. The BPADP was added by a liquid injector in the second half of the extruder. The extrudate was pelletized, and the pellets dried at 80°C for four hours prior to subsequent use. The poly(vinyl chloride) composition G was obtained in pellet form and used as received. The flame-retardant polyethylene composition H was obtained in pellet form and dried at 80°C for four hours prior to use.

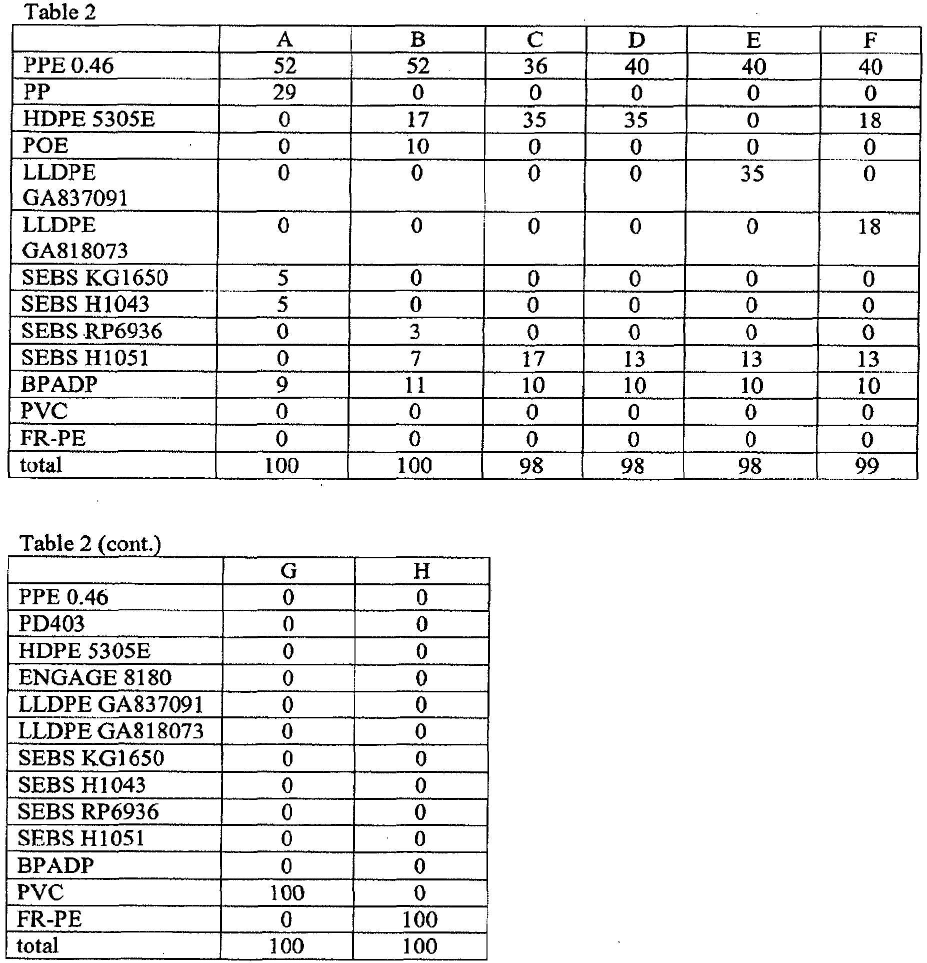

Coated conductors were prepared from poly(arylene ether) compositions A and E, as well as poly(vinyl chloride) composition G and flame retardant polyethylene composition H. The conductor was a copper strand wire having a diameter of 1.8 millimeters. The insulating layer thickness was 0.25 millimeters. The crosshead die extrusion apparatus was a 60 millimeter Cable Extruder from Ohmiya Seiki Co. Ltd. comprising a 60 millimeter internal diameter single-screw extruder operating at 30 rotations per minute, and a crosshead die with an interchangeable die insert. The die insert was either a heart sleeve design, as illustrated in Figure 3, or a helical design, as illustrated in Figure 5. For Comparative Example 1 and Example 1 utilizing the poly(arylene ether)-bascd Composition A, the crosshead die extrusion apparatus was operated at a cylinder temperature of 290°C, a line speed of 200 meters per minute, and a 150°C conductor pre-heating temperature. For Comparative Example 2 and Example 2 utilizing the poly(arylene ether)-based Composition E, the crosshead die extrusion apparatus was operated at a cylinder temperature of 290°C and a line speed of 200 meters per minute, and it utilized an unheated (approximately 23°C) conductor. For Comparative Examples 3 and 4, utilizing the poly(vinyl chloride)-based Composition G, the crosshead die extrusion apparatus was operated at a cylinder temperature of 190°C and a line speed of 200 meters per minute, and it utilized an unheated (approximately 23°C) conductor. For Comparative Examples 5 and 6, utilizing the polyethylene-based Composition H, the crosshead die extrusion apparatus was operated at a cylinder temperature of 230°C and a line speed of 200 meters per minute, and it utilized an unheated (approximately 23°C) conductor.

The coated conductors were evaluated according to three standard protocols. In the first testing protocol, designated "long-term aging class C", long-term aging was conducted at 125 ± 3°C for 3,000 hours according to ISO 6722 (2006), Section 10.1. In the second testing protocol, designated "long term aging class B", long term aging was conducted at 100 ± 2°C for 3,000 hours according to ISO 6722 (2006), Section 10.1. In the third testing protocol, designated "environmental class C", temperature and humidity cycling was conducted according to ISO 6722 (2006), Section 11.6. For this testing, the temperature was cycled between -40 ± 2°C and 125 ± 3°C, and the relative humidity was maintained in the range 80-100%.

Test results are presented in Table 3. The results for the poly(vinyl chloride)-based and polyethylene-based compositions of Comparative Examples 3-6 were unaffected by the die insert type: the long-term aging class B test was passed, the but long-term aging class C test and environmental class C test were failed. In contrast, use of a helical die insert improved the results for the coated wires utilizing the poly(arylene ether)-based compositions. Specifically, for Comparative Example 1 and Example 1 utilizing poly(arylene ether)-based composition A, use of the helical die insert was associated with an improvement in environmental class C test. And for Comparative Example 2 and Example 2 utilizing poly(arylene ether)-based composition E, use of the helical die insert was associated with improvements in the long-term aging class C test and the environmental class C test.

These results illustrate the unexpected, synergistic benefit of combining a poly(arylene ether)-based insulation composition with an extrusion coating method utilizing a die insert with helical channels. The results also show that the use of poly(arylene ether)-based composition E with the helical die insert produced a coated wire that passed the long-term aging class C test, the long-term aging class B test, and the environmental class C test. No other combination of composition and die insert type produced a coated wire that passed all three tests.

**Table 3**

| | C. Ex. 1 | Ex. 1 | C. Ex. 2 | Ex. 2 | C. Ex 3 | C. Ex. 4 | C. Ex. 5 | C. Ex. 6 |
|---|---|---|---|---|---|---|---|---|
| COATING VARIABLES | | | | | | | | |
| Composition | A | A | E | E | G | G | H | H |
| Die insert type | heart sleeve | helical flow | heart sleeve | helical flow | heart sleeve | helical flow | heart sleeve | helical flow |
| Cylinder temp. (°C) | 290 | 290 | 290 | 290 | 190 | 190 | 200 | 200 |
| Conductor pre-heat temp. (°C) | 200 | 200 | none | none | None | none | none | none |

| RESULTS | | | | | | | | |
|---|---|---|---|---|---|---|---|---|
| Long term aging class C | fail | fail | fail | pass | Fail | fail | fail | fail |
| Long term aging class B | pass | pass | pass | pass | Pass | pass | pass | pass |
| Environmental class C | fail | pass | fail | pass | Fail | fail | fail | fail |

## Claims

1. A method of forming a coated conductor, comprising:
extruding a thermoplastic composition through a crosshead die apparatus to extrusion coat a conductor with the thermoplastic composition, thereby forming a coated conductor comprising the conductor and an insulating layer disposed on the conductor;
wherein the crosshead die apparatus comprises
a die, and
a die insert comprising a helical channel;
wherein said extruding comprises a movement of the thermoplastic composition through the helical channel toward the die; and
wherein the thermoplastic composition comprises
5 to 60 weight percent of a poly(arylene ether),
5 to 70 weight percent of a hydrogenated block copolymer of an alkenyl aromatic compound and conjugated diene, and
2 to 40 weight percent of a flame retardant;
wherein all weight percent values are based on the total weight of the thermoplastic composition unless another basis is specified.

2. The method of claim 1, wherein the die insert comprises at least two helical channels.

3. The method of claim 1 or 2, wherein the insulating layer viewed in cross section comprises at least two weld lines.

4. The method of any of claims 1-3, wherein the helical channel defines an axis of a helix, and wherein the helical channel comprises at least 0.5 rotation the axis of the helix.

5. The method of any of claims 1-4, wherein the die insert further comprises a retrograde channel in fluid communication with the helical channel; and wherein said extruding comprises a movement of the thermoplastic composition through the retrograde channel prior to said movement through the helical channel.

6. The method of any of claims 1-5, wherein said extruding a thermoplastic composition comprises extruding the thermoplastic composition at a temperature of 255 to 310°C.

7. The method of any of claims 1-6, wherein the thermoplastic composition comprises 10 to 15 weight percent of the hydrogenated block copolymer.

8. The method of any of claims 1-7, wherein the hydrogenated block copolymer comprises at least 3 weight percent, based on the total weight of the thermoplastic composition, of a high poly(alkenyl aromatic) content hydrogenated block copolymer comprising 40 to 90 weight percent, based on the weight of the high poly(alkenyl aromatic) content hydrogenated block copolymer, of poly(alkenyl aromatic) content.

9. The method of any of claims 1-8, wherein the thermoplastic composition further comprises 2 to 45 weight percent of a polyolefin.

10. The method of claim 9, wherein the polyolefin is selected from the group consisting of propylene homopolymers, ethylene/α-olefin copolymers, and mixtures thereof.

11. The method of claim 9 or 10, wherein the polyolefin comprises an ethylene/1-hexene copolymer.

12. The method of claim 1,
wherein the die insert comprises at least four helical channels;
wherein the thermoplastic composition comprises
37 to 55 weight percent of the poly(arylene ether),
7 to 15 weight percent of the hydrogenated block copolymer, and
7 to 12 weight percent of the flame retardant;
wherein the poly(arylene ether) comprises a poly(2,6-dimethyl-1,4-phenylene ether) having an intrinsic viscosity of 0.40 to 0.50 deciliter per gram measured in chloroform at 25°C;
wherein the hydrogenated block copolymer comprises at least 5 to 15 weight percent, based on the total weight of the thermoplastic composition, of a high poly(alkenyl aromatic) content hydrogenated block copolymer comprising 40 to 90 weight percent, based on the weight of the high poly(alkenyl aromatic) content hydrogenated block copolymer, of poly(alkenyl aromatic) content; wherein the hydrogenated block copolymer comprises 5 to 15 weight percent of a high poly(alkenyl aromatic) content hydrogenated block copolymer; wherein the flame retardant consists of one or more organophosphate esters; and
wherein the thermoplastic composition further comprises 25 to 39 weight percent of a polyolefin selected from the group consisting of propylene homopolymers, ethylene/α-olefin copolymers, and mixtures thereof.

13. The method of claim 12, wherein the coated conductor passes the Class C Temperature and Humidity Cycling test of ISO 6722 (2006), Section 11.6.

14. The method of claim 1,
wherein the die insert comprises at least four helical channels;
wherein the thermoplastic composition comprises
35 to 45 weight percent of the poly(arylene ether),
10 to 16 weight percent of the hydrogenated block copolymer, and
7 to 12 weight percent of the flame retardant;
wherein the poly(arylene ether) comprises a poly(2,6-dimethyl-1,4-phenylene ether) having an intrinsic viscosity of 0.40 to 0.50 deciliter per gram measured in chloroform at 25°C;
wherein the hydrogenated block copolymer comprises 10 to 16 weight percent of a high poly(alkenyl aromatic) content hydrogenated block copolymer;
wherein the hydrogenated block copolymer comprises 10 to 16 weight percent, based on the total weight of the thermoplastic composition, of a high poly(alkenyl aromatic) content hydrogenated block copolymer comprising 40 to 50 weight percent, based on the weight of the high poly(alkenyl aromatic) content hydrogenated block copolymer, of poly(alkenyl aromatic) content; wherein the flame retardant consists of one or more organophosphate esters; and
wherein the thermoplastic composition further comprises 30 to 40 weight percent of a polyolefin comprising an ethylene/1-hexene copolymer.

15. The method of claim 14, wherein the coated conductor passes the Class C Long-Term Heat Ageing test of ISO 6722(2006), Section 10.1 and the Class C Temperature and Humidity Cycling test of ISO 6722 (2006), Section 11.6.

## Patentansprüche

1. Verfahren zur Bildung eines beschichteten Leiters, umfassend:
Extrudieren einer thermoplastischen Zusammensetzung durch eine Querspritzkopf-Apparatur bzw. Apparatur mit Querkopfziehform, um einen Leiter mit der thermoplastischen Zusammensetzung zu Extrusions-beschichten, um dadurch einen beschichteten Leiter zu bilden, der den Leiter und eine auf dem Leiter angeordnete Isolierschicht umfasst;
wobei die Querspritzkopf-Apparatur umfasst
eine Düse bzw. ein Extrudierwerkzeug, und
einen Form- bzw. Düsen- bzw. Matrizeneinsatz, der einen schraubenförmigen Kanal umfasst;
wobei das Extrudieren eine Bewegung der thermoplastischen Zusammensetzung durch den schraubenförmigen Kanal hin zu der Düse bzw. dem Extrudierwerkzeug umfasst; und
wobei die thermoplastische Zusammensetzung
5 bis 60 Gewichtsprozent eines Poly(arylenether)s,
5 bis 70 Gewichtsprozent eines hydrierten Block-Copolymers einer aromatischen Alkenylverbindung und eines konjugierten Diens, und
2 bis 40 Gewichtsprozent eines Flammschutzmittels umfasst;
wobei alle Gewichtsprozentwerte auf das Gesamtgewicht der thermoplastischen Zusammensetzung bezogen sind, soweit keine andere Basis angegeben ist.

2. Verfahren nach Anspruch 1, wobei der Form- bzw. Düsen- bzw. Matrizeneinsatz wenigstens zwei schraubenförmige Kanäle umfasst.

3. Verfahren nach Anspruch 1 oder 2, wobei die Isolierschicht bei Ansicht im Querschnitt wenigstens zwei Bindenähte umfasst.

4. Verfahren nach irgendeinem der Ansprüche 1-3, wobei der schraubenförmige Kanal eine Achse einer Helix definiert und wobei der schraubenförmige Kanal wenigstens 0,5 Umdrehungen der Achse der Helix umfasst.

5. Verfahren nach irgendeinem der Ansprüche 1-4, wobei der Form- bzw. Düsen- bzw.
Matrizeneinsatz weiterhin einen rückwärtsgerichteten Kanal in Fluidverbindung mit dem schraubenförmigen Kanal aufweist; und wobei das Extrudieren eine Bewegung der thermoplastischen Zusammensetzung durch den rückwärtsgerichteten Kanal vor der Bewegung durch den schraubenförmigen Kanal umfasst.

6. Verfahren nach irgendeinem der Ansprüche 1-5, wobei das Extrudieren einer thermoplastischen Zusammensetzung das Extrudieren der thermoplastischen Zusammensetzung bei einer Temperatur von 255 bis 310°C umfasst.

7. Verfahren nach irgendeinem der Ansprüche 1-6, wobei die thermoplastische Zusammensetzung 10 bis 15 Gewichtsprozent des hydrierten Block-Copolymers umfasst.

8. Verfahren nach irgendeinem der Ansprüche 1-7, wobei das hydrierte Block-Copolymer wenigstens 3 Gewichtsprozent, bezogen auf das Gesamtgewicht der thermoplastischen Zusammensetzung, eines hydrierten Block-Copolymers mit hohem Poly(alkenylaromaten)-Gehalt umfasst, welches 40 bis 90 Gewichtsprozent Poly(alkenylaromaten)-Gehalt, bezogen auf das Gewicht des hydrierten Block-Copolymers mit hohem Poly(alkenylaromaten)-Gehalt, umfasst.

9. Verfahren nach irgendeinem der Ansprüche 1-8, wobei die thermoplastische Zusammensetzung weiterhin 2 bis 45 Gewichtsprozent eines Polyolefins umfasst.

10. Verfahren nach Anspruch 9, wobei das Polyolefin aus der Gruppe bestehend aus Propylen-Homopolymeren, Ethylen-/α-Olefin-Copolymeren und Gemischen davon ausgewählt ist.

11. Verfahren nach Anspruch 9 oder 10, wobei das Polyolefin ein Ethylen-/1-Hexen-Copolymer umfasst.

12. Verfahren nach Anspruch 1,
wobei der Form- bzw. Düsen- bzw. Matrizeneinsatz wenigstens vier schraubenförmige Kanäle umfasst;
wobei die thermoplastische Zusammensetzung
37 bis 55 Gewichtsprozent des Poly(arylenether)s,
7 bis 15 Gewichtsprozent des hydrierten Block-Copolymers, und
7 bis 12 Gewichtsprozent des Flammschutzmittels umfasst;
wobei der Poly(arylenether) einen Poly(2,6-dimethyl-1,4-phenylenether) mit einer Struktur- bzw. Grenzviskosität bzw. intrinsischen Viskosität von 0,40 bis 0,50 Deziliter pro Gramm bei Messung in Chloroform bei 25°C umfasst;
wobei das hydrierte Block-Copolymer wenigstens 5 bis 15 Gewichtsprozent, bezogen auf das Gesamtgewicht der thermoplastischen Zusammensetzung, eines hydrierten Block-Copolymers mit hohem Poly(alkenylaromaten)-Gehalt umfasst, welches 40 bis 90 Gewichtsprozent Poly(alkenylaromaten)-Gehalt, bezogen auf das Gewicht des hydrierten Block-Copolymers mit hohem Poly(alkenylaromaten)-Gehalt, umfasst;
wobei das hydrierte Block-Copolymer 5 bis 15 Gewichtsprozent eines hydrierten Block-Copolymers mit hohem Poly(alkenylaromaten)-Gehalt umfasst;
wobei das Flammschutzmittel aus einem oder mehreren Organophosphatestern besteht;
und
wobei die thermoplastische Zusammensetzung weiterhin 25 bis 39 Gewichtsprozent eines Polyolefins, ausgewählt aus der Gruppe bestehend aus Propylen-Homopolymeren, Ethylen-/ α-Olefin-Copolymeren, und Gemischen davon umfasst.

13. Verfahren nach Anspruch 12, wobei der beschichtete Leiter den Temperatur-und-Feuchtigkeits-Zyklus-Test der Klasse C (Class C Temperature and Humidity Cycling Test) nach ISO 6722 (2006), Abschnitt (Section) 11.6 erfüllt.

14. Verfahren nach Anspruch 1,
wobei der Form- bzw. Düsen- bzw. Matrizeneinsatz wenigstens vier schraubenförmige Kanäle umfasst;
wobei die thermoplastische Zusammensetzung
35 bis 45 Gewichtsprozent des Poly(arylenether)s,
10 bis 16 Gewichtsprozent des hydrierten Block-Copolymers, und
7 bis 12 Gewichtsprozent des Flammschutzmittels umfasst;
wobei der Poly(arylenether) einen Poly(2,6-dimethyl-1,4-phenylenether) mit einer Struktur- bzw. Grenzviskosität bzw. intrinsischen Viskosität von 0,40 bis 0,50 Deziliter pro Gramm bei Messung in Chloroform bei 25°C umfasst;
wobei das hydrierte Block-Copolymer 10 bis 16 Gewichtsprozent eines hydrierten Block-Copolymers mit hohem Poly(alkenylaromaten)-Gehalt umfasst;
wobei das hydrierte Block-Copolymer 10 bis 16 Gewichtsprozent, bezogen auf das Gesamtgewicht der thermoplastischen Zusammensetzung, eines hydrierten Block-Copolymers mit hohem Poly(alkenylaromaten)-Gehalt umfasst, welches 40 bis 50 Gewichtsprozent Poly(alkenylaromaten)-Gehalt, bezogen auf das Gewicht des hydrierten Block-Copolymers mit hohem Poly(alkenylaromaten)-Gehalt, umfasst; wobei das Flammschutzmittel aus einem oder mehreren Organophosphatestern besteht;
und
wobei die thermoplastische Zusammensetzung weiterhin 30 bis 40 Gewichtsprozent eines Polyolefins umfassend ein Ethylen-/1-Hexen-Copolymer umfasst.

15. Verfahren nach Anspruch 14, wobei der beschichtete Leiter den Wärme-Alterungsbeständigkeits-Test der Klasse C (Class C Long-Term Heat Ageing Test) nach ISO 6722(2006), Abschnitt (Section) 10.1 und den Temperatur-und-Feuchtigkeits-Zyklus-Test der Klasse C (Class C Temperature and Humidity Cycling Test) nach ISO 6722 (2006), Abschnitt (Section) 11.6 erfüllt.

## Revendications

1. Procédé de formation d'une âme conductrice revêtue, comprenant :
l'extrusion d'une composition thermoplastique à travers un appareillage de filière à tête d'équerre, pour revêtir de la composition thermoplastique par extrusion une âme conductrice, de façon à former une âme conductrice revêtue comprenant l'âme conductrice et une couche isolante disposée sur l'âme conductrice ;
dans lequel l'appareillage de filière à tête d'équerre comprend :
une filière et,
un insert de filière comprenant un canal hélicoïdal ;
ladite extrusion comprenant un déplacement de la composition thermoplastique vers la filière à travers le canal hélicoïdal ; et
la composition thermoplastique comprenant : 5 à 60 pourcents en poids d'un poly(arylène éther),
5 à 70 pourcents en poids d'un copolymère à blocs hydrogénés d'un composé alcénylaromatique et d'un diène conjugué, et
2 à 40 pourcents en poids d'un retardateur de flamme ;
toutes les valeurs en pourcentage en poids étant rapportées au poids total de la composition thermoplastique, à moins qu'une autre base soit spécifiée.

2. Procédé selon la revendication 1, dans lequel l'insert de filière comprend au moins deux canaux hélicoïdaux.

3. Procédé selon la revendication 1 ou 2, dans lequel la couche isolante, quand on l'observe en coupe transversale, comprend au moins deux lignes de soudure.

4. Procédé selon l'une quelconque des revendications 1 à 3, dans lequel le canal hélicoïdal définit un axe d'une hélice, et le canal hélicoïdal comprend au moins 0,5 rotation autour de l'axe de l'hélice.

5. Procédé selon l'une quelconque des revendications 1 à 4, dans lequel l'insert de filière comprend en outre un canal rétrograde en communication fluidique avec le canal hélicoïdal ; et ladite extrusion comprenant un déplacement de la composition thermoplastique à travers le canal rétrograde avant ledit déplacement à travers le canal hélicoïdal.

6. Procédé selon l'une quelconque des revendications 1 à 5, dans lequel ladite extrusion d'une composition thermoplastique comprend l'extrusion de la composition thermoplastique à une température de 255 à 310°C.

7. Procédé selon l'une quelconque des revendications 1 à 6, dans lequel la composition thermoplastique comprend 10 à 15 pourcents en poids du copolymère à blocs hydrogénés.

8. Procédé selon l'une quelconque des revendications 1 à 7, dans lequel le copolymère à blocs hydrogénés comprend au moins 3 pourcents en poids, par rapport au poids total de la composition thermoplastique, d'un copolymère à blocs hydrogénés à teneur élevée en poly(alcénylaromatiques), comprenant 40 à 90 pourcents en poids, par rapport au poids du copolymère à blocs hydrogéné à teneur élevée en poly(alcénylaromatiques), de composés poly(alcénylaromatiques).

9. Procédé selon l'une quelconque des revendications 1 à 8, dans lequel la composition thermoplastique comprend en outre 2 à 45 pourcents en poids d'une polyoléfine.

10. Procédé selon la revendication 9, dans lequel la polyoléfine est choisie dans le groupe consistant en les homopolymères du propylène, les copolymères éthylène/α-oléfine et les mélanges de ceux-ci.

11. Procédé selon la revendication 9 ou 10, dans lequel la polyoléfine comprend un copolymère éthylène/1-hexène.

12. Procédé selon la revendication 1,
dans lequel l'insert de filière comprend au moins quatre canaux hélicoïdaux ;
la composition thermoplastique comprenant 37 à 55 pourcents en poids du poly(arylène éther),
7 à 15 pourcents en poids du copolymère à blocs hydrogénés, et
7 à 12 pourcents du retardateur de flamme ;
le poly(arylène éther) comprenant un poly(2,6-diméthyl-1,4-phénylène éther) ayant une viscosité intrinsèque de 0,40 à 0,50 décilitre par gramme, mesurée dans le chloroforme à 25°C ;
le copolymère à blocs hydrogénés comprenant au moins 5 à 15 pourcents en poids, par rapport au poids total de la composition thermoplastique, d'un copolymère à blocs hydrogénés à teneur élevée en poly(alcénylaromatiques), comprenant 40 à 90 pourcents en poids, par rapport au poids du copolymère à blocs hydrogénés à teneur élevée en poly(alcénylaromatiques), de composés poly(alcénylaromatiques) ;
le copolymère à blocs hydrogénés comprenant 5 à 15 pourcents en poids d'un copolymère à blocs hydrogénés à teneur élevée en poly(alcénylaromatiques) ;
le retardateur de flamme consistant en un ou plusieurs esters organophosphates ; et
la composition thermoplastique comprenant en outre 25 à 39 pourcents en poids d'une polyoléfine choisie dans le groupe consistant en les homopolymères du propylène, les copolymères éthylène/α-oléfine et les mélanges de ceux-ci.

13. Procédé selon la revendication 12, dans lequel l'âme conductrice revêtue passe avec succès l'essai de cyclage de la température et de l'humidité de Classe C selon ISO 6722 (2006), Section 11.6.

14. Procédé selon la revendication 1,
dans lequel l'insert de filière comprend au moins quatre canaux hélicoïdaux ;
la composition thermoplastique comprenant 35 à 45 pourcents en poids du poly(arylène éther),
10 à 16 pourcents en poids du copolymère à blocs hydrogénés, et
7 à 12 pourcents en poids du retardateur de flamme ;
le poly(arylène éther) comprenant un poly(2,6-diméthyl-1,4-phénylène éther) ayant une viscosité intrinsèque de 0,40 à 0,50 décilitre par gramme, mesurée dans le chloroforme à 25°C ;
le copolymère à blocs hydrogénés comprenant 10 à 16 pourcents en poids d'un copolymère à blocs hydrogénés à teneur élevée en poly(alcénylaromatiques) ;
le copolymère à blocs hydrogénés comprenant 10 à 16 pourcents en poids, par rapport au poids total de la composition thermoplastique, d'un copolymère à blocs hydrogénés à teneur élevée en poly(alcénylaromatiques), comprenant 40 à 50 pourcents en poids, par rapport au poids du copolymère à blocs hydrogénés à teneur élevée en poly(alcénylaromatiques), de composés poly(alcénylaromatiques) ;
le retardateur de flamme consistant en un ou plusieurs esters organophosphates ; et
la composition thermoplastique comprenant en outre 30 à 40 pourcents en poids d'une polyoléfine comprenant un copolymère éthylène/1-hexène.

15. Procédé selon la revendication 14, dans lequel l'âme conductrice revêtue passe avec succès l'essai de vieillissement à la chaleur à long terme de Classe C selon ISO 6722 (2006), Section 10.1, et l'essai de cyclage de la température et de l'humidité de Classe C selon ISO 6722 (2006), Section 11.6.
